(19) Europäisches Patentamt
European Patent Office
Office européen des brevets

(11) **EP 2 870 773 B1**

(12) **FASCICULE DE BREVET EUROPEEN**

(45) Date de publication et mention de la délivrance du brevet:
**02.09.2020 Bulletin 2020/36**

(21) Numéro de dépôt: **13734063.4**

(22) Date de dépôt: **03.07.2013**

(51) Int Cl.:
**H04N 21/433** $^{(2011.01)}$   **H04N 5/781** $^{(2006.01)}$

(86) Numéro de dépôt international:
**PCT/EP2013/064033**

(87) Numéro de publication internationale:
**WO 2014/006092 (09.01.2014 Gazette 2014/02)**

(54) **DISPOSITIF ET PROCEDE D'ENREGISTREMENT DE DONNEES RELATIFS A UNE FONCTION DE DECALAGE TEMPOREL SUR UN SUPPORT D'ENREGISTREMENT**

DATENAUFZEICHNUNGSVORRICHTUNG UND VERFAHREN IM ZUSAMMENHANG MIT EINER VERSCHIEBUNGSFUNKTION AUF EINEM AUFZEICHNUNGSMEDIUM

DATA RECORDING DEVICE AND METHOD RELATING TO A TIME SHIFTING FUNCTION ON A RECORDING MEDIUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **03.07.2012   FR 1256384**
**03.07.2012   FR 1256377**
**03.07.2012   FR 1256378**
**03.07.2012   FR 1256379**
**03.07.2012   FR 1256381**
**03.07.2012   FR 1256383**
**03.07.2012   FR 1256380**

(43) Date de publication de la demande:
**13.05.2015   Bulletin 2015/20**

(73) Titulaire: **InterDigital CE Patent Holdings**
**75017 Paris (FR)**

(72) Inventeurs:
• **LE GARJAN, Bruno**
**F-35576 Cesson-Sévigné (FR)**
• **GENIEUX, Vincent**
**F-35576 Cesson-Sévigné (FR)**
• **MAGRAS, André**
**F-35576 Cesson-Sévigné (FR)**
• **BURGUIERE, Guillaume**
**F-35770 Vern-sur-Seiche (FR)**
• **MENARD, Arnaud**
**F-35576 Cesson-Sévigné (FR)**
• **THOMAS, Brieuc**
**F-35576 Cesson-Sévigné (FR)**
• **AUFFRAY, Michel**
**F-35450 Livré sur Changeon (FR)**
• **BESSON, Viviane**
**F-35576 Cesson-Sévigné (FR)**

(74) Mandataire: **Huchet, Anne et al**
**InterDigital CE Patent Holdings**
**20, rue Rouget de Lisle**
**92130 Issy-les-Moulineaux (FR)**

(56) Documents cités:
**EP-A2- 2 150 045        WO-A1-2004/100539**
**WO-A2-2007/116334     US-A1- 2002 172 497**

• **"LED TV user manual", , 31 décembre 2010 (2010-12-31), XP055069183, Extrait de l'Internet: URL:http://content.etilize.com/User-Manual /1017245148.pdf [extrait le 2013-07-02]**

**Description**

L'invention concerne un dispositif et une méthode d'enregistrement de données sur un support d'enregistrement implémentant une fonction de décalage temporel.

La présente invention se rapporte à un procédé et à un dispositif de lecture différée de données vidéo numériques. Cette fonction est aussi appelée fonction de décalage temporel (« timeshift » en anglais).

Les documents vidéo codés sous forme de données numériques offrent de nombreuses possibilités de traitement.

Par exemple, le document XP055069183 "LED TV user manual" décrit des fonctionalités offertes aux utilisateurs de téléviseurs numériques Samsung et noatmment la fonctionalité avance "Mediua Play" qui permet de disposer de contenus TV, photos, musicaux et/or de films enregistrés sur un appareil USB de type Mass Storage Class (MSC) ou sur un ordinateur personnel.

Dans le document EP2150045 A2, il est proposé un appareil de commande d'enregistrement comprenant un module de réglage d'enregistrement qui règle l'enregistrement des canaux et un premier temps d'enregistrement pour un premier canal des canaux; un module de calcul de temps d'enregistrement qui calcule un temps d'enregistrement pour chacun des canaux autres que le premier canal, sur la base de la capacité restante d'un module d'enregistrement et du premier temps d'enregistrement; des modules de sélection de canal, où chacun sélectionne un signal de diffusion d'un canal, les modules de sélection de canal comprenant un premier module de sélection de canal qui sélectionne un premier signal de diffusion du premier canal; et un module de commande d'enregistrement qui commande l'enregistrement du premier signal de diffusion en fonction du premier temps d'enregistrement et contrôle l'enregistrement des signaux de diffusion des canaux autres que le premier canal en fonction du temps d'enregistrement.

Le document US2002172497 A1 décrit un appareil pour enregistrer et reproduire des informations avec un tampon en anneau qui est capable d'empêcher un écrasement sur une partie de reproduction programmée pendant la reproduction à décalage temporel. Lorsqu'une position de reproduction actuelle dans le tampon en anneau est antérieure à une position d'enregistrement actuelle et qu'une vitesse d'enregistrement au moment présent est supérieure à une vitesse de reproduction, la vitesse de reproduction est augmentée de force.

Dans le document WO2004/100539 A1,Il est proposé un procédé pour indiquer si un programme est capable d'être entièrement enregistré dans un espace de stockage restant sur un dispositif de stockage. Un dispositif d'affichage à l'écran est configuré comme une grille ayant un premier axe et un deuxième axe. Le premier axe est destiné à identifier les sélections de programmation et le second axe est destiné à identifier les temps de diffusion respectifs des sélections de programmation. N'importe laquelle des sélections de programmation actuellement capables d'être entièrement enregistrées dans l'espace de stockage restant sur le dispositif de stockage est identifiée sur la grille à l'aide d'un premier identifiant visuel distinctif. N'importe laquelle des sélections de programmation qui sont actuellement incapables d'être entièrement enregistrées dans l'espace de stockage restant sur le dispositif de stockage sont identifiées sur la grille à l'aide d'un deuxième identificateur visuel distinctif.

Le document WO2007/116334 A2 décrit un serveur multimédia comprenant un tampon circulaire qui tamponne un flux multimédia reçu pour fournir une fonction de décalage temporel. Un processeur d'indication de fichier génère une première indication de fichier linéaire pour le tampon circulaire qui est transmise aux clients multimédias. L'indication de fichier linéaire a une première indication de synchronisation de fichier. Un récepteur peut recevoir un message de demande de média d'au moins un client multimédia comprenant une demande de média indiquée par la première indication de fichier linéaire et comprenant une indication de début de lecture par rapport à la première indication de synchronisation de fichier. Un contrôleur de lecture détermine un point de lecture pour le tampon circulaire en réponse à l'indication de début de lecture et un émetteur multimédia transmet les médias du premier tampon circulaire à au moins un client multimédia en réponse au point de lecture. Si la demande est en dehors du t tampon circulaire, un flux prédéterminé indiquant que le support demandé n'est pas disponible est transmis.

L'invention concerne plus particulièrement la lecture différée de données enregistrées sur un support d'enregistrement, qui consiste à enregistrer un programme sur un support d'enregistrement dans un fichier, plusieurs fichiers ou une zone quelconque, tout en relisant simultanément ce programme avec un certain retard. Cette application permet à l'utilisateur de suspendre la relecture du programme lorsqu'il le désire et de la reprendre là où il s'est arrêté.

Les dispositifs connus, notamment des dispositifs de type décodeur numérique de télévision, permettant d'implémenter des procédés de relecture différée présent de nombreux inconvénients.

Parmi ces dispositifs connus, certains proposent des procédés dans lesquels la quantité de ressources de stockage pouvant être allouée à un fichier autre que le fichier de relecture différée dépend des autres applications effectuées par le dispositif. Ceci engendre de nombreux inconvénients :

D'une part, le fichier de lecture différée ne peut plus disposer de nouvelles ressources pour continuer le stockage de données.

D'autre part, la capacité de stockage allouée au procédé de lecture différé n'étant pas contrôlée, il est possible que ce procédé occupe une quantité trop importante de données de stockage du décodeur, générant alors des dysfonctionnements de ce dernier, par exemple pour effectuer d'autres applications ne pouvant pas accéder à une capacité de stockage requise.

Par ailleurs, lorsque le procédé de lecture différée est utilisé simultanément à d'autres applications requérant un stockage de données, la gestion de l'espace de stockage alloué à chaque application s'avère complexe et difficile. Ce problème est d'autant plus sensible lorsque la capacité de stockage est réduite et cela est le cas lorsque les décodeurs possèdent uniquement des mémoires de type RAM (acronyme anglais de « Random access memory) ou flash de capacité plus limitée que celle des disques durs.

Lorsque la mémoire tampon de décalage temporel est pleine, le début de la mémoire tampon de décalage temporel est tronqué et on libère de l'espace pour enregistrer la suite des données reçues. On voit alors que si l'utilisateur lit les données avec un gros décalage par rapport à leur écriture dans la mémoire tampon de décalage temporel, le pointeur de lecture est en début de la mémoire tampon de décalage temporel, il est fort possible que les nouvelles données reçues viennent écraser des données qui n'ont pas encore été lues ou ne puissent être écrites. Dans ce cas, le pointeur de lecture doit faire des sauts dans la mémoire tampon, ce qui donne une lecture très perturbée pour l'utilisateur puisque l'affichage des données saute dans le temps.

Ce phénomène est accentué lorsque les débits des données reçues varient dans le temps et vont en s'accroissant. Il arrive fréquemment que les diffuseurs de programmes diffusent des chaines de télévision à des débits variables. Une même chaîne n'ayant pas un débit constant, il est difficile de prévoir la capacité de la mémoire tampon nécessaire pour s'adapter à ces fluctuations de débit et justement éviter trop de sauts dans le temps, dues à des troncatures de la mémoire tampon.

Il est donc important de paramétrer la mémoire tampon de manière à éviter de tels sauts dans le temps ou du moins à les réduire.

La présente divulgation concerne un dispositif de réception et d'enregistrement de données sur un support d'enregistrement objet de la revendication 1.

Le dispositif comprend dans certains modes de réalisation des caractéristiques décrites par les revendications dépendentes de la revendication 1 .

Notamment, selon un mode de réalisation, le dispositif comprend un processeur pour implémenter une fonction de décalage temporel dans une partie du support d'enregistrement appelée mémoire tampon de décalage temporel, caractérisé en ce qu'il comprend

- Des moyens de définir un premier seuil définissant une limite en capacité de la mémoire tampon de décalage temporel et
- Des moyens de définir un second seuil définissant une limite en temps d'enregistrement dans la mémoire tampon de décalage temporel et
- Le processeur enregistre les données dans la mémoire tampon de décalage temporel tant que le second seuil n'est pas atteint et lorsque le second seuil est atteint avant le premier seuil, le processeur tronque le début de la mémoire tampon de décalage temporel lorsque les données en cours de lecture ne sont pas situées en début de la mémoire tampon ou repasse en lecture des données de la mémoire tampon de décalage temporel lorsque les données en cours de lecture sont situées en début de la mémoire tampon de décalage temporel.

Avantageusement, le processeur comprend

- des moyens d'analyser lors de chaque réception d'un canal de données au moins le débit moyen de chaque canal,
- des moyens d'ajuster le second seuil en fonction du au moins débit moyen.

Avantageusement, les moyens d'analyser le débit moyen analysent également le débit maximal de chaque canal, les moyens d'ajuster la limite en temps d'enregistrement ajustant alors la limite en fonction dudit débit moyen et du débit maximal de chaque canal.

Avantageusement, la limite en temps d'enregistrement est ajustée pour chaque canal en fonction de son débit moyen.

Avantageusement, la capacité est ajustée pour chaque canal en fonction de son débit moyen et de son débit maximal.

De manière préférée, le processeur comprend

- des moyens d'analyser le type des données reçues,
- des moyens d'ajuster le second seuil en fonction du type de données reçues.

Préférentiellement, le type comprend :

- Des données audio,
- Des données vidéo de définition standard,

- Des données vidéo haute définition.

Avantageusement, le processeur comprend

- Des moyens de détecter un seuil de remplissage de la mémoire tampon.

Avantageusement, le processeur comprend des moyens de transcoder les données reçues lorsque le seuil de remplissage est franchi. Avantageusement, le processeur comprend des moyens de détecter le type des données reçues. Avantageusement, le processeur comprend des moyens de transcoder les données reçues lorsque le type de données correspond à des données de type haut débit.
Avantageusement, le processeur comprend

- des moyens de détecter les données relatives à la langue visualisée par l'utilisateur ou au sous-titrage regardé par l'utilisateur, lorsque le seuil de remplissage est franchi,
- Des moyens de n'enregistrer dans la mémoire tampon de décalage temporel que les données détectées.

Avantageusement, le processeur comprend des moyens de détecter les données relatives à la langue visualisée par l'utilisateur ou au sous-titrage regardé par l'utilisateur, et des moyens de n'enregistrer dans la mémoire tampon de décalage temporel que les données détectées lorsque le type de données correspond à des données de type haut débit.
Avantageusement, le processeur comprend des moyens d'enregistrer dans la mémoire tampon de décalage temporel uniquement un pourcentage inférieur à la totalité des groupes de données reçues lorsque les données reçues sont codées en groupe de données lorsque le seuil de remplissage est franchi.
Avantageusement, le processeur comprend des moyens d'enregistrer dans la mémoire tampon de décalage temporel uniquement un pourcentage inférieur à la totalité des groupes de données reçues lorsque les données reçues sont codées en groupe de données lorsque le type de données correspond à des données de type haut débit.
La présente divulgation concerne également un procédé de réception et d'enregistrement de données sur un support d'enregistrement, objet de la revendication 2.
Le procédé comprend dans certains modes de réalisation des caractéristiques décrites par les revendications dépendentes de la revendication 2. Notamment, selon un mode de réalisation, le procédé comprend :

- La détermination d'un premier seuil définissant une limite en capacité de la mémoire tampon de décalage temporel et
- La détermination d'un second seuil définissant une limite en temps d'enregistrement dans la mémoire tampon de décalage temporel et
- L'enregistrement des données dans la mémoire tampon de décalage temporel tant que le second seuil n'est pas atteint et
- lorsque le second seuil est atteint avant le premier seuil, troncature du début de la mémoire tampon de décalage temporel lorsque les données en cours de lecture ne sont pas situées en début de la mémoire tampon ou
- passage en mode lecture des données de la mémoire tampon de décalage temporel lorsque les données en cours de lecture sont situées en début de la mémoire tampon de décalage temporel.

Notamment, selon un mode de réalisation, le processeur comprend :

- Des moyens de définir un premier seuil définissant une limite en capacité de la mémoire tampon de décalage temporel et
- des moyens de définir un second seuil définissant une limite en temps d'enregistrement dans la mémoire tampon de décalage temporel et
- des moyens de définir un troisième seuil définissant une limite minimale en temps d'enregistrement dans la mémoire tampon de décalage temporel
- le processeur enregistre les données dans la mémoire tampon de décalage temporel tant que l'un au moins du premier seuil ou du second seuil n'est pas atteint et lorsque l'un au moins des deux seuils est atteint :
- si le troisième seuil est également atteint, alors

   o si le pointeur de lecture du processeur se trouve dans une zone de la mémoire tampon de décalage temporel dans laquelle le processeur doit tronquer des données, le processeur repasse en mode lecture normale de la mémoire tampon de décalage temporel si le mode pause était activé ou si la vitesse de lecture était inférieure à la vitesse normale de lecture, et
   o si le pointeur de lecture du processeur ne se trouve pas dans une zone de la mémoire tampon de décalage temporel dans laquelle le processeur doit tronquer des données, alors le processeur tronque des données dans la mémoire tampon de décalage temporel.

Préférentiellement, lorsque le processeur est repassé en mode lecture à vitesse normale, alors si le seuil de remplissage atteint la taille définie en terme de capacité d'enregistrement, le processeur effectue un saut au pointeur de lecture.

Préférentiellement, le processeur comprend des moyens de définir le type des données reçues et des moyens de définir les trois seuils en fonction du type des données reçues.

Préférentiellement, le type de données est choisi parmi le type audio, vidéo haute définition ou vidéo de définition standard.

Préférentiellement,, le type de données est choisi parmi un type de codage dans lequel les données sont codées, et de préférence lorsque les données sont des données vidéo, parmi le type MPEG-2 ou le type H-264. Préférentiellement, le processeur comprend

- des moyens d'analyser lors de chaque réception d'un canal de données au moins le débit moyen de chaque canal,
- des moyens de définir la valeur des trois seuils en fonction du débit moyen de chaque canal, pour chaque canal reçu.

Préférentiellement, les moyens d'analyser le débit moyen analysent également le débit maximal de chaque canal et les moyens de définir la valeur des trois seuils définissent les valeurs de chaque seuil en fonction du débit moyen et du débit maximal de chaque canal.

Préférentiellement, le dispositif comprend

- des moyens de déterminer que la mémoire tampon de décalage temporel a atteint un seuil de remplissage dit seuil critique.

Selon un mode de réalisation de l'invention, le dispositif comprend des moyens de transcoder les données reçues.

Selon un mode de réalisation de l'invention, les moyens de transcoder les données reçues transcodent les données reçues uniquement lorsque le seuil critique est atteint.

Selon un mode de réalisation, le dispositif comprend des moyens de n'enregistrer dans la mémoire tampon de décalage temporel, qu'un pourcentage des groupes de données reçues, lorsque les données reçues sont codées en groupe de données.

Selon un mode de réalisation de l'invention, les moyens de n'enregistrer dans la mémoire tampon de décalage temporel qu'un pourcentage des groupes de données reçues, le font uniquement lorsque le seuil critique est atteint.

Selon un mode de réalisation de l'invention, les données étant codées dans une pluralité de modes, les modes étant relatifs à une langue audio ou à un sous-titrage, il comprend

- des moyens de détecter le mode dans lequel les données sont décodées,
- des moyens d'enregistrer dans la mémoire tampon les données uniquement dans le mode décodé.

Selon un mode de réalisation de l'invention, les moyens d'enregistrer dans la mémoire tampon les données uniquement dans le mode décodé le font uniquement lorsque le seuil critique est atteint.

Notamment, selon un mode de réalisation, le procédé comprend

- une détermination d'un premier seuil définissant une limite en capacité de la mémoire tampon de décalage temporel et,
- une détermination d'un second seuil définissant une limite en temps d'enregistrement dans la mémoire tampon de décalage temporel et
- une détermination d'un troisième seuil définissant une limite minimale en temps d'enregistrement dans la mémoire tampon de décalage temporel
- l'enregistrement des données dans la mémoire tampon de décalage temporel tant que l'un au moins du premier seuil ou du second seuil n'est pas atteint et lorsque l'un au moins des deux seuils est atteint :
- si le troisième seuil est également atteint, alors

  ◦ si le pointeur de lecture du processeur se trouve dans une zone de la mémoire tampon de décalage temporel dans laquelle le processeur doit tronquer des données, passage en mode lecture normale de la mémoire tampon de décalage temporel si le mode pause était activé ou si la vitesse de lecture était inférieure à la vitesse normale de lecture, et

  ◦ si le pointeur de lecture du processeur ne se trouve pas dans une zone de la mémoire tampon de décalage temporel dans laquelle le processeur doit tronquer des données, alors troncature des données dans la mémoire tampon de décalage temporel.

Notamment, selon un mode de réalisation, le dispositif comprend des moyens de détection du type de données reçues, et des moyens d'ajuster une limite en temps d'enregistrement dans la mémoire tampon de décalage temporel en fonction du type de données reçues.

Préférentiellement, le type de données peut être choisi parmi des données de type audio, des données de type vidéo haute définition et des données de type définition standard.

Préférentiellement, les données comprennent un identifiant indiquant le type de données, les moyens de détection lisant alors le type dans les données reçues.

Préférentiellement, les données sont codées au format MPEG-2 TS, l'identifiant étant alors le champ PMT.

Préférentiellement, le dispositif comprend des moyens d'ajuster une limite en taille définissant une capacité de la mémoire tampon de décalage temporel, en fonction au moins dudit type de données reçues.

Préférentiellement, les moyens d'ajuster une limite en temps ajustent également une limite de temps minimale garantissant un temps d'enregistrement dans la mémoire tampon de décalage temporel quelque soit le débit maximal des données reçues, en fonction au moins dudit type de données reçues.

Avantageusement, le dispositif comprend des moyens de transcoder les données reçues préalablement à leur enregistrement dans la mémoire tampon de décalage temporel.

Avantageusement, les données étant codées dans une pluralité de modes, les modes étant relatifs à une langue audio ou à un sous-titre le processeur comprend des moyens de détecter le mode dans lequel les données sont décodées, et des moyens d'enregistrer dans la mémoire tampon de décalage temporel, les données uniquement dans le seul mode décodé.

Préférentiellement, les données étant des données audio vidéo codées en groupes de données vidéos et en groupe de données ,le dispositif comprend des moyens de n'enregistrer dans la mémoire tampon qu'un pourcentage inférieur à la totalité des groupe de données vidéo reçus et tous les groupes de données audio.

Préférentiellement les moyens de transcoder les données reçues préalablement à leur enregistrement dans la mémoire tampon de décalage temporel transcodent les données uniquement lorsque le remplissage de la mémoire tampon de décalage temporel est supérieur à un premier seuil ou lorsque le débit des données reçues est supérieur à premier seuil.

Selon un mode de réalisation, les moyens d'enregistrer dans la mémoire tampon de décalage temporel, les données uniquement dans le seul mode décodé le font uniquement lorsque le remplissage de la mémoire tampon de décalage temporel est supérieur à un premier seuil ou lorsque le débit des données reçues est supérieur à premier seuil.

Notamment, selon un mode de réalisation, le procédé comprend les étapes de :

- détection du type de données reçues,
- ajustement d'une limite en temps d'enregistrement dans la mémoire tampon de décalage temporel en fonction dudit type de données reçues.

Notamment, selon un mode de réalisation, le processeur dudit dispositif comprend :

- des moyens d'initialiser la mémoire tampon de manière à rendre sa capacité en temps d'enregistrement égale à un seuil fixé,
- des moyens d'analyser lors de chaque réception d'un canal de données au moins le débit moyen de chaque canal,
- des moyens d'ajuster la capacité en temps d'enregistrement de la mémoire tampon à une valeur supérieure à la valeur de seuil en fonction du au moins débit moyen.

Selon un mode de réalisation, les moyens d'analyser le débit moyen analysent également le débit maximal de chaque canal, les moyens d'ajuster la capacité en temps d'enregistrement ajustant alors la capacité en fonction du débit moyen et du débit maximal de chaque canal.

Selon un mode de réalisation, la capacité est ajustée pour chaque canal en fonction de son débit moyen.

Selon un mode de réalisation, la capacité est ajustée pour chaque canal en fonction de son débit moyen et de son débit maximal.

Selon un mode de réalisation, le dispositif comprend des moyens d'ajuster une limite en taille (BSB) définissant une capacité de la mémoire tampon de décalage temporel en fonction au moins du débit moyen.

Selon un mode de réalisation, les moyens d'ajuster une limite en taille définissant une capacité de la mémoire tampon de décalage temporel en fonction au moins du débit moyen ajustent la taille en outre en fonction du débit maximal.

Selon un mode de réalisation, les moyens d'ajuster une limite en temps ajustent également une limite de temps minimale (MBSS) garantissant un temps d'enregistrement dans la mémoire tampon de décalage temporel quelque soit le débit maximal des données reçues, en fonction au moins du débit moyen.

Selon un mode de réalisation, la limite de temps minimale est ajustée en fonction du débit moyen et du débit maximal.

Selon un mode de réalisation de la quatrième invention, le dispositif comprend des moyens de transcoder les données reçues préalablement à leur enregistrement dans la mémoire tampon de décalage temporel.

Selon un mode de réalisation, les données sont codées dans une pluralité de modes, les modes étant relatifs à une langue audio ou à un sous-titre, le processeur comprend :

- des moyens de détecter le mode dans lequel les données sont décodées,
- des moyens d'enregistrer dans la mémoire tampon de décalage temporel, les données uniquement dans le seul mode décodé.

Selon un mode de réalisation, les données sont des données audio vidéo codées en groupes de données vidéo et en groupe de données audio, il comprend des moyens de n'enregistrer dans la mémoire tampon qu'un pourcentage inférieur à la totalité des groupes de données vidéo reçus et tous les groupes de données audio.

Selon un mode de réalisation, les moyens de transcoder les données reçues préalablement à leur enregistrement dans la mémoire tampon de décalage temporel transcodent les données uniquement lorsque le remplissage de la mémoire tampon de décalage temporel est supérieur à un premier seuil ou lorsque le débit des données reçues est supérieur à premier seuil.

Selon un mode de réalisation, les moyens d'enregistrer dans la mémoire tampon de décalage temporel, les données uniquement dans le seul mode décodé le font uniquement lorsque le remplissage de la mémoire tampon de décalage temporel est supérieur à un premier seuil ou lorsque le débit des données reçues est supérieur à premier seuil.

Selon un mode de réalisation, le procédé comprenf les étapes :

- d'initialisation de la mémoire tampon de manière à rendre sa capacité en temps d'enregistrement égale à un seuil fixé,
- d'analyse, lors de chaque réception d'un canal de données, d'au moins le débit moyen de chaque canal,
- d'ajustement de la capacité en temps d'enregistrement de la mémoire tampon à une valeur supérieure à la valeur de seuil en fonction du au moins débit moyen.

Selon un mode de réalisation, le processeur comprend des moyens de transcoder les données reçues afin de réduire la quantité de données à enregistrer avant de les enregistrer dans la mémoire tampon de décalage temporel.

Avantageusement, ce dernier dispositif comprend des moyens de détecter que la mémoire tampon a atteint un taux de remplissage supérieur à une première valeur de seuil prédéterminée.

Avantageusement, les moyens de transcoder les données reçues ne transcodent les données reçues que lorsque la première valeur de seuil est dépassée.

Avantageusement, ce dernier dispositif comprend des moyens de détecter le débit des données reçues.

Avantageusement, les moyens de transcoder les données reçues ne transcodant les données reçues que lorsque le débit est supérieur à un débit déterminé.

Avantageusement, ce dernier dispositif comprend des moyens de détecter la langue audio et les sous-titres sélectionnés et de n'enregistrer dans la mémoire tampon de décalage temporel les données que dans la langue audio sélectionnée et les sous-titres sélectionnés.

Avantageusement, les moyens de détecter la langue audio et les sous-titres sélectionnés n'enregistrent dans la mémoire tampon de décalage temporel les données que dans la langue audio sélectionnée et les sous-titres sélectionnés que lorsque la mémoire tampon de décalage temporel a atteint une seconde valeur de seuil au moins égale à la première valeur de seuil. Avantageusement, les moyens de détecter la langue audio et les sous-titres sélectionnés n'enregistrent dans la mémoire tampon de décalage temporel les données que dans la langue audio sélectionnée et les sous-titres sélectionnés que lorsque le débit est supérieur à un second débit déterminé, le second débit étant supérieur au premier débit.

Avantageusement, les données reçues sont codées en groupe de données, le dispositif comprend en outre des moyens de n'enregistrer qu'une partie des groupes de données dans la mémoire tampon de décalage temporel.

Préférentiellement, les moyens de n'enregistrer qu'une partie des groupes de données dans la mémoire tampon de décalage temporel n'enregistrent qu'une partie des groupes de données que lorsque le remplissage de la mémoire tampon de décalage temporel a atteint une troisième valeur de seuil au moins égale à la seconde valeur de seuil.

Selon un mode de réalisation de l'invention, les moyens de n'enregistrer qu'une partie des groupes de données dans la mémoire tampon de décalage temporel n'enregistrent qu'une partie des groupes de données que lorsque le débit est supérieur à un second débit déterminé, le second débit étant supérieur au premier débit.

Selon un mode de réalisation, les données sont des données audio vidéo, il comprend des moyens de détecter un champ dans les données relatif au moins au débit de codage, des moyens de modifier le champ en fonction du transcodage et des moyens d'associer la valeur de champ modifiée à une position temporelle dans les données, la position temporelle étant relative à l'instant auquel les données ont commencé à être transcodées.

Selon un mode de réalisation, le procédé comprenf une étape de transcodage des données reçues afin de réduire la quantité de données à enregistrer avant de les enregistrer dans la mémoire tampon de décalage temporel. Selon un mode de réalisation, le processeur comprend

- des moyens de détecter le mode dans lequel les données sont décodées,
- des moyens d'enregistrer dans la mémoire tampon de décalage temporel, les données uniquement dans le seul mode décodé.

Selon un mode de réalisation de cette sixième invention, les moyens de n'enregistrer dans la mémoire tampon de décalage temporel que les données dans un seul mode décodé sont aptes à déclencher l'enregistrement lorsque le seuil de remplissage de la mémoire tampon est supérieur à une première valeur prédéterminée.

Selon un mode de réalisation , les moyens de n'enregistrer dans la mémoire tampon de décalage temporel que les données dans un seul mode décodé sont aptes à déclencher l'enregistrement lorsque le débit des données reçues est supérieur à une valeur prédéterminée.

Selon un mode de réalisation de cette sixième invention, lorsque les données sont codées selon la norme MPEG-2 ou MPEG-4, les tables PMT associées aux données sont modifiées préalablement à leur enregistrement.

Selon un mode de réalisation , le processeur comprend en outre :

- des moyens de détecter le taux de remplissage de la mémoire de décalage temporel suite à l'enregistrement des données dans le seul mode décodé,
- des moyens de n'enregistrer, dans la mémoire tampon de décalage temporel, qu'une partie des groupes de données reçues, lorsque les données sont codées en groupes de données, lorsque le taux de remplissage est supérieur à un second seuil supérieur au premier seuil.

Selon un mode de réalisation , le processeur comprend en outre :

- des moyens de détecter le taux de remplissage de la mémoire tampon de décalage temporel suite à l'enregistrement desdites données dans le seul mode décodé,
- des moyens de transcoder les données dans le seul mode décodé préalablement à leur enregistrement dans la mémoire tampon de décalage temporel lorsque le taux de remplissage est supérieur à un troisième seuil supérieur audit premier seuil.

Selon un mode de réalisation , le processeur comprend en outre :

- des moyens de transcoder la partie des groupes de données dans le seul mode décodé préalablement à leur enregistrement dans la mémoire tampon de décalage temporel lorsque le taux de remplissage est supérieur à un quatrième seuil supérieur audit second seuil.

Selon un mode de réalisation, le procédé comprend

- une étape de détection du mode dans lequel les données sont décodées,
- une étape de n'enregistrer dans la mémoire tampon de décalage temporel, que les données dans un seul mode décodé.

Selon un mode de réalisation,, le dispositif comprend des moyens de n'enregistrer dans la mémoire qu'un pourcentage inférieur à la totalité des groupes de données vidéo reçus et tous les groupes de données audio.

Selon un mode de réalisation , les moyens de n'enregistrer dans la mémoire qu'un pourcentage inférieur à la totalité des groupes de données vidéo reçus et tous les groupes de données audio, sélectionnent un groupe de données sur x groupes de données reçus, x étant dépendant du débit des données reçues.

Selon un mode de réalisation , le dispositif comprend en outre des moyens de détecter que la mémoire tampon a atteint un taux de remplissage supérieur à un premier seuil prédéterminé.

Selon un mode de réalisation , les moyens de n'enregistrer dans la mémoire tampon qu'un pourcentage des groupes de données vidéo, n'enregistrent le pourcentage que si le remplissage de la mémoire tampon a atteint le seuil.

Selon un mode de réalisation , on enregistre un pourcentage des groupes de données vidéos, le pourcentage étant proportionnel au rapport entre le débit de lecture des données dans la mémoire tampon et le débit d'écriture des données dans la mémoire tampon.

Selon un mode de réalisation , les données étant codées dans une pluralité de modes, les modes étant relatifs à une langue audio ou à un sous-titrage, le processeur comprend

- des moyens de détecter le mode dans lequel les données sont décodées,
- des moyens d'enregistrer dans la mémoire tampon de décalage temporel, les données uniquement dans le seul mode décodé.

Selon un mode de réalisation, les moyens de n'enregistrer dans la mémoire tampon de décalage temporel que les données dans un seul mode décodé sont aptes à déclencher l'enregistrement lorsque le seuil de remplissage de la mémoire tampon est supérieur à un second seuil.

Selon un mode de réalisation, les moyens de n'enregistrer dans la mémoire tampon de décalage temporel que les données dans un seul mode décodé sont aptes à déclencher l'enregistrement lorsque le débit des données reçues est supérieur à une valeur prédéterminée.

Selon un mode de réalisation de cette septième invention, le processeur comprend en outre :

- des moyens de détecter le taux de remplissage de la mémoire tampon de décalage temporel suite à l'enregistrement d'un pourcentage des groupes de données vidéo,
- des moyens de transcoder le pourcentage des groupes de donnés à enregistrer préalablement à leur enregistrement dans la mémoire tampon de décalage temporel lorsque le taux de remplissage est supérieur à un troisième seuil supérieur au premier seuil.

Selon un mode de réalisation, le processeur comprend en outre :

- des moyens de transcoder la partie des groupes de données dans le seul mode décodé préalablement à leur enregistrement dans la mémoire tampon de décalage temporel lorsque le taux de remplissage est supérieur à un quatrième seuil supérieur au second seuil.

Selon un mode de réalisation, le procédé comprend une étape de n'enregistrer dans la mémoire qu'un pourcentage inférieur à la totalité des groupes de données vidéo reçus et tous les groupes de données audio.

L'invention sera mieux comprise et illustrée au moyen d'exemples de modes de réalisation et de mise en œuvre avantageux, nullement limitatifs, en référence aux figures annexées sur lesquelles :

- la figure 1 représente un schéma général d'un environnement d'utilisation d'un décodeur selon un mode de réalisation préféré des inventions proposées,
- la figure 2 représente un schéma général d'un décodeur selon un mode de réalisation préféré des inventions proposées,
- la figure 3 représente un premier mode de réalisation de la première invention,
- la figure 4 représenté un second mode de réalisation de l'invention, dans lequel des paramètres de la mémoire tampon de décalage temporel sont ajustés en fonction d'au moins un débit des données reçues,
- la figure 5 représente un troisième mode de réalisation de l'invention, dans lequel des paramètres de la mémoire tampon de décalage temporel sont ajustés en fonction du type des données reçues,
- les figures 6a et 6b représentent un premier exemple de diminution de débit appliqué aux données reçues,
- les figures 7a et 7b représentent un second exemple de diminution de débit appliqué aux données reçues,
- les figures 8a et 8b représentent un troisième exemple de diminution de débit appliqué aux données reçues.
- La figure 9 représente un mode de réalisation préféré,
- Les figures 10 et 11 représentent des variantes de réalisation.

Les modules représentés sont des unités fonctionnelles, qui peuvent ou non correspondre à des unités physiquement distinguables. Par exemple, ces modules ou certains d'entre eux peuvent être regroupés dans un unique composant, ou constituer des fonctionnalités d'un même logiciel. A contrario, certains modules peuvent être éventuellement composés d'entités physiques séparées.

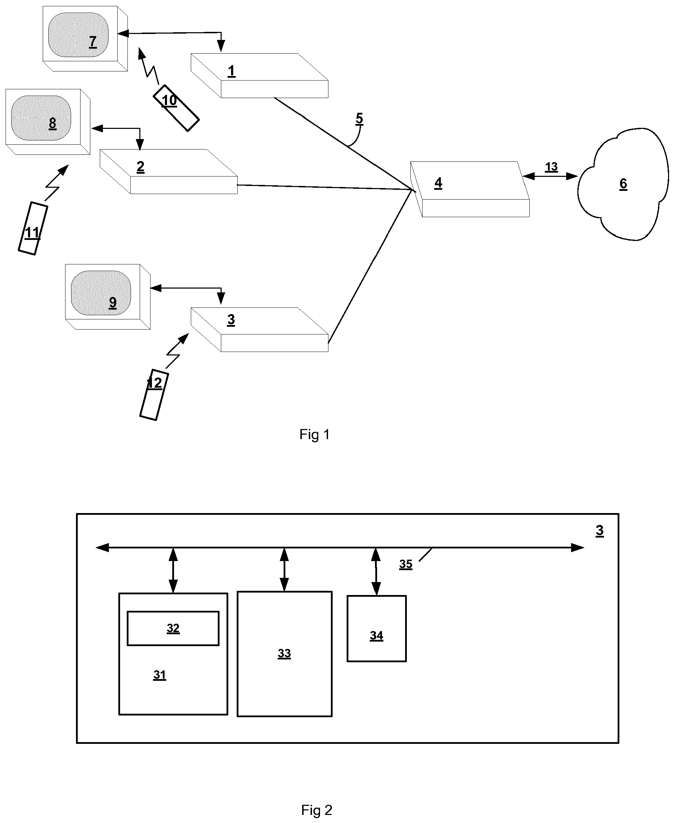

Les figures 1 et 2 sont applicables à toutes les modes de réalisation décrits dans ce document.

La figure 1 représente un système comprenant des dispositifs de réceptions 1, 2 3 encore appelés décodeurs numériques mettant en œuvre l'invention. De tels dispositifs peuvent être connectés à des interfaces 4 encore appelées passerelles par l'intermédiaire d'un réseau local 5 de type éthernet par exemple. Un rôle principal des passerelles est de connecter les dispositifs 1, 2 et 3 à un ou plusieurs réseaux extérieurs. Sur la figure 1, la passerelle 4 est connectée à un fournisseur de service internet (ISP) 6 par l'intermédiaire d'un réseau de type ADSL 13 (acronyme anglais de « asynchronous digital subscriber line »). La passerelle 1 peut également être reliée à d'autres types de réseaux.

Les décodeurs numériques 1, 2 et 3 peuvent d'ailleurs être connectés directement sans passer par une passerelle à un fournisseur de programme. Ils peuvent être de type câble, satellite, multicast IP ou autre et posséder leurs propres moyens de réception, démodulation des signaux reçus par des chaines câbles ou satellites.

L'invention ne se limite donc pas à l'illustration qui lui en est donnée en figure 1 où les décodeurs 1, 2, 3 ne sont pas reliés directement à des fournisseurs de programmes mais par le biais d'une passerelle 4.

Chaque décodeur 1, 2, 3 peut être relié respectivement à un téléviseur 7, 8, 9. Ils peuvent également être reliés à des ordinateurs ou des tablettes ou d'autres dispositifs mobiles, par exemple munis d'un écran. Dans le cas d'une configuration client serveur, la fonction de décalage temporelle est implémentée sur le décodeur serveur et visualisée sur le décodeur client (et éventuellement sur le décodeur serveur) ou un dispositif compagnon, par exemple une tablette ou un autre dispositif.

Un dispositif de contrôle à distance, telle une télécommande à infra rouge, 10, 11, 12 commande respectivement chaque décodeur 1, 2, 3. Ces télécommandes peuvent également commander les téléviseurs 7, 8, 9.

La figure 2 représente un mode de réalisation préféré d'un décodeur selon l'invention, dans lequel on ne voit que les fonctionnalités du décodeur utiles à la compréhension de l'invention.

Le décodeur 3 comprend un processeur 33 en charge de contrôler les principales fonctionnalités du décodeur 3. Il comprend également une mémoire 31 de type RAM qui peut également être de type flash, disque magnétique, tel un disque dur, ou disque optique ou tout autre type. Dans cette mémoire, un fichier 32 est alloué pour la gestion d'une fonction de décalage temporel. Par un fichier, on entend un fichier ou une zone ou une partition portant un file system permettant de gérer des fichiers. Selon le mode préféré de réalisation de l'invention, la taille de ce fichier est de 1 GBytes.

Un bus 35 permet les échanges de données et les contrôles entre les différents composants du décodeur.

En fonctionnement nominal, le décodeur 1 reçoit des données venant de la passerelle 4. Les données reçues sont enregistrées dans la mémoire tampon de décalage temporel en continu. Ceci permet, si l'utilisateur appuie sur un bouton pause de sa télécommande pour arrêter la visualisation du canal qu'il reçoit, de pouvoir lire les données qu'il n'a pas visualisées durant la pause ultérieurement et donc en différé. Un scénario typique étant par exemple la réception d'un appel téléphonique par l'utilisateur. Il appuie alors sur pause pour interrompre la visualisation du programme qu'il reçoit. Au bout de 5 mn, il raccroche et souhaite visualiser ce qui s'est passé pendant les 5mn. Il reprend alors la lecture là où elle s'était arrêtée en visualisant les données contenues dans la mémoire tampon de décalage temporel. S'il le souhaite, il peut également rattraper le direct, en visualisant le contenu de la mémoire tampon de décalage temporel en vitesse accélérée, sinon, il peut continuer à visualiser le contenu de la mémoire tampon de décalage temporel et sera toujours en retard de 5mn par rapport au direct. En général, il est possible de retourner un marche arrière jusqu'au moment où l'utilisateur a changé de chaîne.

Cependant, la taille de la mémoire tampon de décalage temporel est fixée à une taille maximale (UBSB), fixée à 1 GBytes dans le mode de réalisation préféré.

Selon le débit du canal en cours de réception, la durée de programme contenue dans 1GB varie.

Pour un débit du canal à 12Mbit/s, la mémoire tampon de décalage temporel peut contenir 11 mn de programme environ.

Pour un débit du canal à 8Mbits, la mémoire tampon de décalage temporel peut contenir 16 mn de programme environ.

Pour un débit du canal à 4Mbits, la mémoire tampon de décalage temporel peut contenir 32 mn de programme environ.

Pour un débit du canal à 2Mbits, la mémoire tampon de décalage temporel peut contenir 64 mn de programme environ.

Selon l'art antérieur, lorsque la mémoire tampon de décalage temporel est pleine ou a atteint un certain seuil en terme de taux de remplissage, on tronque le début (c'est-à-dire que l'on efface) et on écrit les nouvelles données reçues. La mémoire tampon de décalage temporel est représentée par un fichier de taille fixe et non pas un buffer circulaire, dans le mode de réalisation préféré. On ne réécrit donc pas nécessairement sur les cellules effacées mais on garde la taille du fichier constante, en octets.

Dans d'autres modes de réalisation, la mémoire tampon de décalage temporel peut être de type buffer circulaire. De toute manière, la mémoire de décalage temporel peut être vue comme une mémoire de type circulaire d'un point de vue logique.

Avec les données relatives aux différents débits, données ci-dessus, on constate donc que lorsque l'on se base sur une taille de mémoire tampon de décalage temporel fixe, on a des durées d'enregistrement complètement différentes en fonction du débit du canal. Ceci peut être gênant pour l'utilisateur qui n'observe pas le même comportement pour son décodeur selon le débit du canal reçu.

On appelle BSB le seuil de remplissage en octets de la mémoire tampon de décalage temporel.

On définit alors selon un premier mode de réalisation de l'invention, un autre seuil définissant une limite en temps appelé BSS. Cette limite définit une capacité en minute de remplissage de la mémoire tampon de décalage temporel, par exemple 15mn.

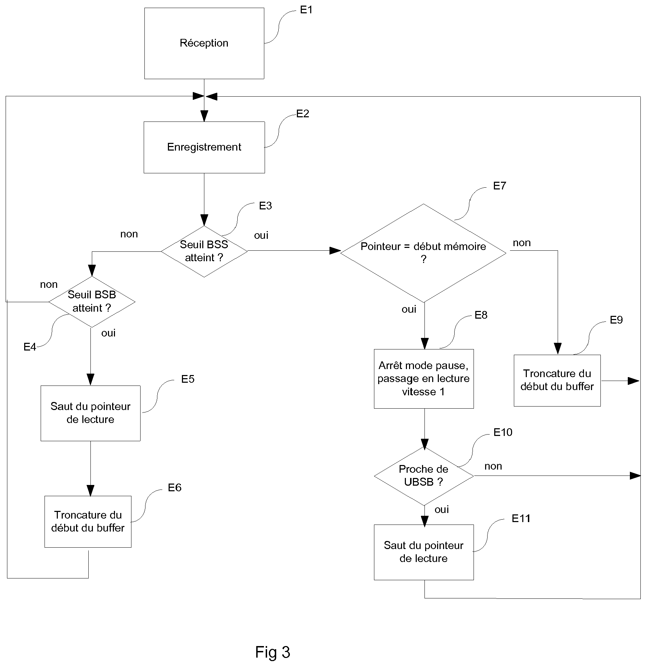

La figure 3 représente ce premier mode de réalisation de la première invention.

Selon ce premier mode de réalisation de l'invention, lors d'une première étape E1, un utilisateur met son décodeur sous tension et sélectionne un canal de réception grâce à sa télécommande. Les données reçues sont alors visualisées par l'utilisateur sur un écran de télévision connecté au décodeur (à noter que le décodeur peut être intégré dans le téléviseur et constituer un seul dispositif). Les données sont également enregistrées dans la mémoire tampon de décalage temporel 32 au fur et à mesure de leur réception, étape E2. Avantageusement, le processeur 33 gère le taux de remplissage de la mémoire tampon de décalage temporel 32 de la manière suivante.

EP 2 870 773 B1

Tant que le seuil BSS n'est pas atteint, étape E3, ni que le seuil BSB n'est pas atteint, étape E4, les données continuent à être enregistrées dans la mémoire tampon de stockage temporel. Si le seuil BSB est atteint alors que le seuil BSS n'est pas atteint, alors on passe à l'étape E5 qui consiste à faire faire un saut au pointeur de lecture de la mémoire tampon de décalage temporel. Le saut (en taille ou en temps), dépend de plusieurs paramètres, de ce qui peut être considéré comme acceptable par un utilisateur. On peut supposer qu'un saut correspondant à quelques secondes, 20 à 30 par exemple, peut être une limite considérée comme acceptable pour un utilisateur. L'étape E5 est suivie de l'étape E6 pendant laquelle le début de la mémoire tampon de décalage temporel est effacé pour pouvoir venir écrire d'autres données reçues, la taille UBSB restant constante. Les données effacées peuvent être effacées à des adresses autres que les adresses où sont écrites les nouvelles données.

Suite à l'étape E6, on repasse à l'étape E2. Pendant les étapes E3 à E6, les données sont continuellement reçues et écrites dans la mémoire tampon de décalage temporel, le seuil BSB étant inférieur au seuil UBSB.

Lorsque le seuil BSS est atteint, étape E3, et si le pointeur de lecture se trouve en début de la mémoire tampon de décalage temporel, étape E7, alors le processeur force le mode pause et le décodeur passe en mode lecture à vitesse normale (vitesse 1), étape E8. Bien entendu, si le décodeur n'était pas en mode pause (ou en retour rapide, ou en vitesse lente comme le ralenti) mais à une vitesse supérieure à 1, alors on le laisse à cette vitesse (par exemple en accéléré fois 2,4...). Ensuite, si le taux de remplissage est proche de la capacité limite d'enregistrement de la mémoire tampon de décalage temporel, étape E10, alors le pointeur de lecture effectue un saut en avant de quelques secondes, étape E11, comme expliqué précédemment, lors de l'étape E5. Si lors de l'étape E7, le pointeur de lecture n'est pas au début de la mémoire tampon de décalage temporel, alors le début de la mémoire tampon de décalage temporel est tronqué, étape E9. Par début, on entend un certain nombre d'adresses, dépendant du débit d'entrée ou fixée, proportionnellement à la taille de la mémoire.

Ainsi, les données peuvent être tronquées périodiquement. Le processeur maintient le taux de remplissage sous le seuil BSS en testant périodiquement la quantité de données enregistrées en temps.

Par début de la mémoire, on peut définir différentes valeurs. Par exemple le début de la mémoire comprend un pourcentage du seuil BSS. Si BSS est paramétré à 15mn, alors le début représente les 5 premières minutes de la mémoire tampon de décalage temporel par exemple.

Lorsque le seuil BSB est atteint avant le seuil BSS, alors le début des données reçues est tronqué dans la mémoire tampon de décalage temporel et un saut temporel de la lecture est réalisé si la zone tronquée contient la position de lecture.

Selon ce premier mode de réalisation, le processeur 33 définit les deux seuils BSB et BSS de manière prédéterminée

De manière prédéterminée, le seuil BSB peut être paramétré à 90% de la capacité totale de stockage (UBSB) de la mémoire tampon de décalage temporel, soit 900MB. Il peut également être paramétré à la valeur maximale de stockage, soit 1 GB mais dans ce cas, il peut y avoir des débordements de la mémoire tampon de décalage temporel.

De manière prédéterminée, le seuil BSS peut être paramétré à 15mn.

Selon un autre aspect de l'invention, au lieu de définir le seuil BSS, il est possible de définir à la place un second seuil en taille BSB2. La figure 3 s'applique de la même manière en remplaçant le seuil BSS par le seuil BSB2. L'avantage de définir ce second seuil en taille et non pas en temps permet d'absorber des variations de débit tout le temps.

Selon un second mode de réalisation, les seuils ou l'un des deux, peut être déterminé de manière dynamique et par exemple en se basant sur des données liées aux différents canaux dont différents exemples sont donnés par la suite.

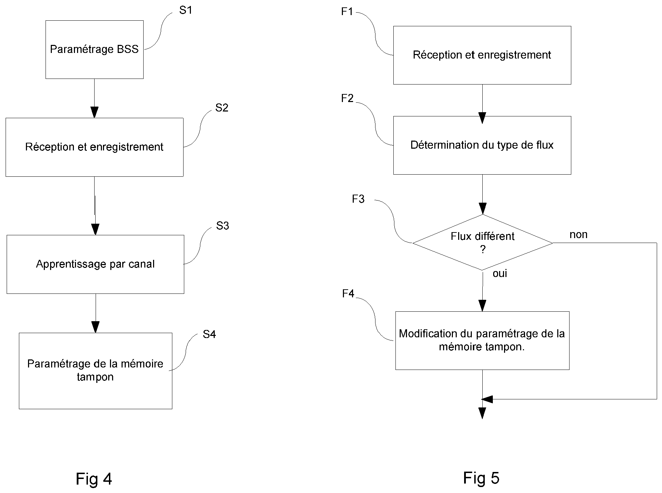

La figure 4 illustre un paramétrage dynamique de la mémoire tampon de décalage temporel selon ce second mode de réalisation.

Lors d'une étape S1, un utilisateur met son décodeur sous tension et sélectionne un canal de réception grâce à sa télécommande. Lors de la mise sous tension, les paramètres de la mémoire tampon de décalage temporel BSB et BSS sont fixés à une taille définie comme minimale. Cette taille est par exemple 1GB pour BSB et 15mn pour BSS. Ces tailles dites minimales peuvent également être paramétrées pour chaque décodeur ou en usine ou par l'utilisateur ou selon le pays d'utilisation du décodeur ou le réseau de diffusion sur lequel le décodeur est connecté. Les données reçues sont alors visualisées par l'utilisateur sur un écran de télévision connecté au décodeur (à noter que le décodeur peut être intégré dans le téléviseur et constituer un seul dispositif). Les données sont également enregistrées dans la mémoire tampon de décalage temporel 32 au fur et à mesure de leur réception, étape S2. L'étape S2 correspond aux étapes E1 et E2 figure 3.

Lors d'une étape S3, le processeur 33 analyse la rapidité à laquelle se remplit la mémoire tampon de décalage temporel afin d'analyser les débits du canal reçu. Le débit moyen et accessoirement le débit maximum sont des données qui permettent de mieux paramétrer la mémoire tampon de décalage temporel. Ceci peut être fait lors de la réception de chaque canal.

Le processeur 33 observe le débit de chaque canal, il peut très bien également observer le débit de plusieurs canaux et faire une moyenne sur ces différents canaux mais dans ce dernier cas, la mesure est moins fiable que canal par canal. Effectuer la mesure sur un ensemble de canaux peut avoir un intérêt si les canaux sont reconnus comme assez similaires en terme de débit. Le débit peut également être une donnée récupérée par exemple sur internet dans le cas de canaux IP plutôt que d'être calculé par le décodeur en interne. Pour des diffusions câble ou satellite, le débit peut également être récupéré par le décodeur, sur un site internet si le décodeur peut aller les récupérer ou sur un site mis en place par l'opérateur ou signalé dans un champ privé de la signalisation, ou service PMT, SDT ou NIT par exemple.

De manière préférée, le processeur 33 analyse le débit de chaque canal et paramètre la mémoire tampon de décalage temporel 32 pour chaque canal. Le paramétrage peut être ajusté dynamiquement lorsque l'on regarde un canal ou peut être utilisé lors de la prochaine connexion à ce canal pour fixer la valeur de seuil de départ au lieu de la fixer à une valeur minimale.

Le seuil BSS est ainsi ajusté en fonction du débit moyen. Toutefois, si le canal présente de fortes variations de débit, il est également intéressant d'ajuster le seuil BSS en fonction du débit maximal du canal.

Si l'on considère que la variation de débit sur un réseau donné est de 50%, le seuil BSS peut être calculé ainsi :

$$BSS = (UBSB - ((BitRateMoy*1.5)*duréeBitRateMax)) / BitRateMoy$$

Lorsque le seuil dépend à a fois du débit moyen et du débit maximum, le seuil BSS peut être calculé ainsi :

$$BSS = (UBSB - (BitRateMax*duréeBitRateMax)) / BitRateMoy$$

Selon une autre variante, le seuil BSB représentant la limite en capacité de la mémoire tampon de décalage temporel est également paramétrée en fonction du débit moyen.

Selon une autre variante, le seuil BSB est également paramétré en fonction du débit moyen et du débit maximal.

L'étape E3 décrite en référence à la figure 3 utilise alors la valeur de seuil définie comme indiqué ci-dessus.

De manière avantageuse, une réduction de débit peut en outre être combinée à ce mode de réalisation et à ses variantes. En effet, si l'on parvient à réduire le débit, alors l'utilisateur peut bénéficier d'une limite en temps d'enregistrement supérieure ou du moins dans un temps identique, il est possible de mettre plus de données reçues.

Selon une première variante liée à la réduction de débit, un transcodage des données est effectué lors de la réception des données.

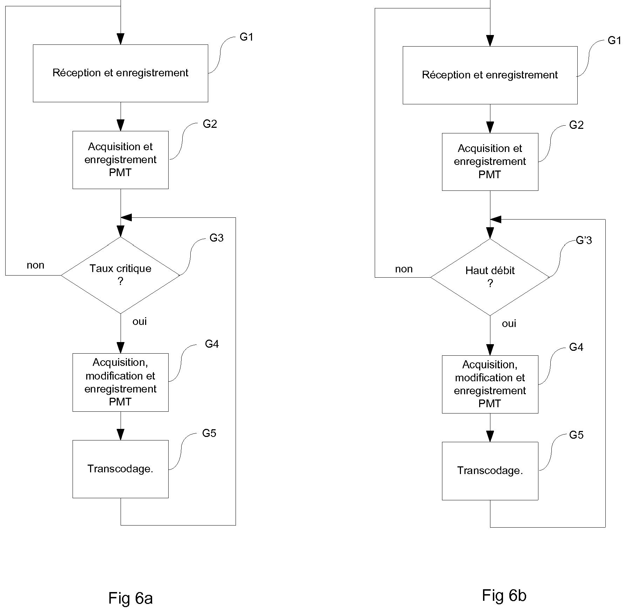

La figure 6a illustre cette variante. Lors de l'étape G1, un utilisateur met son décodeur sous tension et sélectionne un canal de réception grâce à sa télécommande. Les données reçues sont alors visualisées par l'utilisateur sur un écran de télévision connecté au décodeur. Les données sont également enregistrées dans la mémoire tampon de décalage temporel 32 au fur et à mesure de leur réception. L'étape G1 correspond aux étapes E1 et E2 figure 3.

Lors d'une étape G2, le décodeur reçoit les tables PMT avec les données et les enregistre dans la mémoire 31. Les tables PMT sont enregistrées sous forme de métadonnées dans une base de données de la mémoire 31 et sont réinjectées périodiquement à la relecture. Elles peuvent être également être enregistrées avec les données dans la mémoire tampon de décalage temporel mais ceci nécessite de modifier les tables PMT à la relecture pour chaque répétition. Lorsque la mémoire tampon de décalage temporel atteint un seuil de remplissage prédéterminé, étape G3, le processeur 33 décide de transcoder les données reçues afin de réduire leur débit avant leur enregistrement dans la mémoire tampon de décalage temporel. Lors d'une étape G4, selon une première variante, le processeur 33 modifie alors les tables PMT reçues avant de les enregistrer. Les tables PMT sont modifiées pour refléter le nouveau format des données enregistrées et enregistrées en tant que métadata associées à une position dans le flux de données. Le processeur enregistre comme métadata la PMT initiale associée à une position de début de validité et la PMT modifiée associée à la position du début des données transcodées. De même, le processeur gère les versions de table PMT de manière à ce que lors de la relecture, il détecte bien les changements de PMT dues au transcodage et les changements de PMT réels dans le flux.

Par exemple, si le processeur transcode les données entre les instants TO+X et T1-Y, alors, si le flux initial comprend les PMT suivantes :

T0 PMT V2.... T1 PMT V3

dans le flux enregistré et décodé on a les PMT suivantes :

TO PMT V2.... TO+X PMT V3 .....T1-Y PMT V4 ..... T1 PMY V5

A la relecture, la table PMT est injectée périodiquement dans le flux, par exemple toutes les 100ms en fonction de la position. Si le processeur fait des sauts dans le flux, le processeur injecte la PMT précédent la position atteinte. Toute transition de PMT est gérée comme une nouvelle version de PMT dans le flux.

Lors de la relecture, il y a un passage par un écran noir ou un gel de l'image, due à cette transition. Afin de limiter cette transition par un écran noir ou un gel de l'image, il est également possible, pendant un cours instant, d'enregistrer à la fois les données initiales (non transcodée) et les données transcodées bas débit de manière à ce qu'à la relecture il soit possible d'utiliser deux décodeurs vidéo temporairement et basculer d'un décodeur vers l'autre.

Selon une seconde variante de cette étape G4, les tables PMT ne sont pas modifiées. A cet effet, le processeur utilise des métadatas associées à une position dans le flux, les métadatas contenant toutes les informations nécessaires pour permettre de substituer les données initiales par les données bas débit. De la même manière, il est possible de limiter les écrans noirs ou gel de l'image en enregistrant quelques secondes les données transcodées et non transcodées et en générant les métadatas reflétant ces transitions.

Les données sont transcodées lors d'une étape G5. Tant que la mémoire tampon de décalage temporel contient des données supérieures à un seuil prédéterminé, les données reçues sont transcodées. Ce dernier seuil peut être inférieur d'ailleurs au seuil qui initie le début du transcodage.

Selon une variante représentée sur la figure 6b, l'étape G3 est remplacée par une étape G3'. Les autres étapes G1, G2, G4, G5 du procédé représenté sur la figure 6b sont identiques aux étapes G1, G2, G4, G5 du procédé de la figure 6a.

Lors de l'étape G3', le processeur décide de transcoder non pas en fonction d'un seuil de remplissage de la mémoire tampon mais en déterminant le débit des données reçues. Lorsque le débit est supérieur à un débit seuil prédéterminé, le processeur 33 décide alors de transcoder les données reçues. Par débit, on entend ici, soit le débit moyen des données reçues, soit un débit estimé en fonction des données reçues comme indiqué précédemment. Si les données sont audio, leur débit est inférieur au débit de données vidéo SD et au débit de données vidéo HD.

Les figures 6a et 6b sont relatives au transcodage des données. Lorsqu'un tel transcodage est utilisé comme décrit précédemment, l'étape G5 est alors suivie de l'étape E3 décrite en référence à la figure 3. L'avantage principal du transcodage faisant que le seuil BSS est atteint moins rapidement que lorsque les données ne sont pas transcodées. L'inconvénient étant bien entendu la diminution de la résolution ou de la qualité des données enregistrées dans la mémoire tampon de décalage temporel.

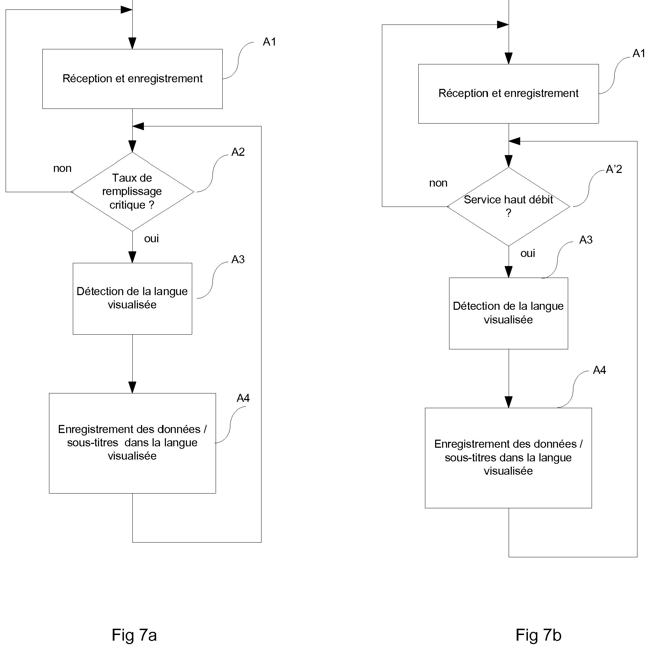

Selon une seconde variante liée à la réduction de débit, une réduction de débit peut être appliquée en enregistrant uniquement certaines parties des données. Les figures 7a et 7b illustrent une telle variante.

Effectivement, lorsque les données reçues sont des données audio vidéo et des sous-titres, les données sont parfois reçues dans différentes langues audio avec également plusieurs choix de sous-titres. Or, l'utilisateur change rarement la langue écoutée en cours de programme, ni le sous-titrage. Il est donc possible de réduire les données enregistrées dans la mémoire tampon de décalage temporel en enregistrant uniquement les données dans la langue audio sélectionnées et les sous-titres choisis. Ceci est également valable dans le cas de multiples vidéos.

Lors d'une étape A1, les données sont reçues par le décodeur 3 et enregistrées dans la mémoire tampon de décalage temporel. Lorsque la mémoire tampon de décalage temporel 32 atteint un seuil de remplissage prédéterminé, en temps, étape A2, le processeur détecte la langue décodée et les sous-titres visualisés, étape A3. Lors d'une étape A4, le processeur enregistre alors uniquement les données audio et les sous-titres en cours de visualisation et d'écoute.

Afin de refléter les données telles qu'enregistrées, c'est-à-dire modifiées, les tables PMT sont modifiées lors de l'enregistrement des données modifiées auxquelles elles renvoient.

Selon une variante représentée sur la figure 7b, l'étape A2 est remplacée par une étape A'2. Les autres étapes A1, A3, A4 du procédé représenté sur la figure 7b sont identiques aux étapes A1, A3, A4 du procédé de la figure 7a.

Lors de l'étape A'2, le processeur décide de ne pas enregistrer tous les flux de données audio vidéo et sous-titres correspondant aux différentes langues non pas en fonction d'un seuil de remplissage de la mémoire tampon mais en déterminant le débit des données reçues. Lorsque le débit est supérieur à un débit seuil prédéterminé, le processeur 33 décide alors de n'enregistrer que les données dans la langue audio sélectionnée et les sous-titres choisis. Par débit, on entend ici, soit le débit moyen des données reçues, soit un débit estimé en fonction des données reçues comme indiqué précédemment. Si les données sont des données audio, leur débit est inférieur au débit de données vidéo SD et au débit de données vidéo HD.

Selon une variante de ces figures 7a et 7b, il est également possible de décider de n'enregistrer que les données visualisées et écoutées sans même faire le test de l'étape A2. Dès que les données sont décodées par le processeur 33 afin d'être visualisées et écoutées (par un utilisateur qui a sélectionné la langue et les sous-titres qu'il souhaite visualiser), le processeur peut décider de n'enregistrer que les données correspondant au choix de l'utilisateur.

Les figures 7a et 7b sont relatives à un enregistrement partiel des données. Lorsqu'un tel transcodage est utilisé comme décrit précédemment, l'étape A4 est alors suivie de l'étape E3 décrite en référence à la figure 3. L'avantage principal étant que le seuil BSS est atteint moins rapidement que lorsque les données ne sont pas transcodées.

Selon une troisième variante liée à la réduction de débit, le processeur 33 n'enregistre qu'une partie des groupes de données reçues. Lorsque les données sont conformes aux standards de codage MPEG, par exemple MPEG-2 ou MPEG-4, les données sont codées sous la forme de groupes d'images connus sous l'acronyme GOP (acronyme anglais de « Group Of Pictures).

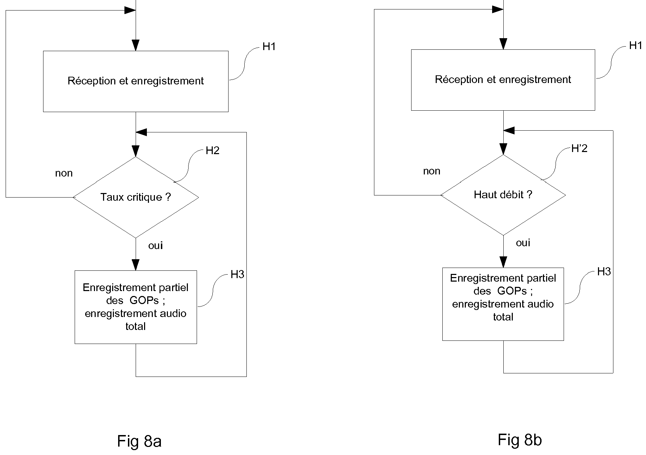

Les figures 8a et 8b illustrent ce mode de réalisation.

Lors d'une étape H1, les données sont reçues par le décodeur 3 et enregistrées dans la mémoire tampon de décalage temporel. L'étape H1 correspond aux étapes E1 et E2 figure 3. Lorsque la mémoire tampon de décalage temporel 32 atteint un seuil de remplissage prédéterminé, en temps, étape H2, le processeur décide de n'enregistrer qu'un pourcentage des groupes de données (GOP) reçus, étape H3.

Le pourcentage de GOPs enregistré varie en fonction du débit des données reçues. Si le débit est considéré comme un haut débit, par exemple lorsque des données HD sont reçues, alors un pourcentage élevé des GOPs n'est pas enregistré. On enregistre par exemple 3 GOPs sur 4 reçus. Les GOPs sont délimités par l'indexation des images de type intra (I) ou des images de type IDR pour les données conformes au standard de codage MPEG4. Par contre, afin d'avoir un son correct, toutes les données audio sont enregistrées. Ainsi, à la lecture de la mémoire tampon de stockage temporel, les données vidéos varient lentement (il y a des gels de l'image pour les GOPs manquants) mais le son et les sous-titres sont restitués intégralement.

Selon une variante représentée sur la figure 8b, l'étape H2 est remplacée par une étape H2'. Les autres étapes H1, H3 du procédé représenté sur la figure 8b sont identiques aux étapes H1, H3 du procédé de la figure 8a.

Lors de l'étape H'2, le processeur décide de ne pas enregistrer tous les GOPs non pas en fonction d'un seuil de remplissage de la mémoire tampon mais en déterminant le débit des données reçues. Lorsque le débit est supérieur à un débit seuil prédéterminé, le processeur 33 décide alors de n'enregistrer qu'un pourcentage des GOPs. Par débit, on entend ici, soit le débit moyen des données reçues, soit un débit estimé en fonction des données reçues comme indiqué précédemment. Si les données sont audio, leur débit est inférieur au débit de données vidéo SD et au débit de données vidéo HD. Cette variante engendre une dégradation importante des données et est moins pertinente que la variante décrite en référence à la figure 8a.

Selon une variante de ces figures 8a et 8b, il est également possible de décider de n'enregistrer qu'un pourcentage des GOPs sans même faire le test de l'étape H2. Dès que les données sont décodées par le processeur 33 afin d'être visualisées et écoutées, le processeur peut décider de n'enregistrer qu'un pourcentage des GOPs en fonction du débit des données reçues. Cette variante engendre cependant une dégradation importante de toutes les données.

Les figures 8a et 8b sont relatives à un enregistrement partiel des données. Lorsqu'une telle réduction de débit est utilisée, l'étape H4 est alors suivie de l'étape E3 décrite en référence à la figure 3. L'avantage principal étant que le seuil BSS est atteint moins rapidement que lorsque les données sont enregistrées en totalité.

Selon une quatrième variante liée à la réduction de débit, le processeur 33 combine une réduction de débit liée au transcodage à une réduction de débit liée à un enregistrement des données sélectionnées par l'utilisateur (langue et sous-titrage). Ainsi, dans un premier temps, le processeur 33 applique une réduction de débit en faisant un transcodage des données reçues selon les étapes décrites en figure 6a ou 6b.

Suite à l'étape G5 de la figure 6a ou 6b on effectue les étapes A3 et A4 de la figure 7a ou 7b et ainsi le flux est transcodé puis seules les données correspondant à la langue audio sélectionnée et aux sous-titrages choisis sont enregistrées dans la mémoire tampon de décalage temporel.

Lorsqu'une telle réduction de débit combinée est utilisée, l'étape A4 est alors suivie de l'étape E3 décrite en référence à la figure 3. L'avantage principal étant que le seuil BSS est atteint moins rapidement que lorsque les données sont enregistrées en totalité.

Selon une cinquième variante liée à la réduction de débit, le processeur 33 combine une réduction de débit liée au transcodage à une réduction de débit liée à un enregistrement partiel des GOPs. Ainsi, dans un premier temps, le processeur 33 applique une réduction de débit en faisant un transcodage des données reçues selon les étapes décrites en figure 6a ou 6b.

Suite à l'étape G5 de la figure 6a ou 6b on effectue l'étape H3 de la figure 8a ou 8b et ainsi le flux est transcodé puis seulement certains GOPs sont enregistrés dans la mémoire tampon de décalage temporel.

Lorsqu'une telle réduction de débit combinée est utilisée, l'étape H3 est alors suivie de l'étape E3 décrite en référence à la figure 3. L'avantage principal étant que le seuil BSS est atteint moins rapidement que lorsque les données sont enregistrées en totalité.

Selon une sixième variante liée à la réduction de débit, le processeur 33 combine une réduction de débit liée à l'enregistrement des données (langues et sous-titrages) sélectionnées par l'utilisateur à une réduction de débit liée à un enregistrement partiel des GOPs. Ainsi, dans un premier temps, le processeur 33 applique une réduction de débit en faisant une sélection des données effectivement sélectionnées par l'utilisateur et en n'enregistrant pas dans la mémoire tampon de décalage temporel, les données audio et les sous-titrages non utilisées selon les étapes décrites en figure 7a ou 7b.

Suite à l'étape A3 de la figure 7a ou 7b on effectue l'étape H3 de la figure 8a ou 8b et ainsi le débit du flux est doublement réduit.

Lorsqu'une telle réduction de débit combinée est utilisée, l'étape H3 est alors suivie de l'étape E3 décrite en référence à la figure 3. L'avantage principal étant que le seuil BSS est atteint moins rapidement que lorsque les données sont enregistrées en totalité.

Selon une septième variante liée à la réduction de débit, le processeur 33 combine une réduction de débit liée au transcodage à une réduction de débit liée à l'enregistrement des flux effectivement utilisés et à un enregistrement d'un pourcentage des GOPs. Ainsi dans un premier temps, le processeur 33 applique une réduction de débit en faisant un transcodage des données reçues selon les étapes décrites en figure 6a ou 6b.

Ensuite, le processeur 33 applique une réduction de débit en enregistrant uniquement les données effectivement utilisées, en terme de langue et en terme de sous-titrage selon les étape décrites en figure 7a ou 7b. Puis le processeur 33 effectue ensuite une troisième réduction de débit en enregistrant uniquement un pourcentage des GOPs selon les étapes décrites en figure 8a et 8b.

Lorsqu'une telle réduction de débit combinée est utilisée, l'étape H3 est alors suivie de l'étape E3 décrite en référence à la figure 3. L'avantage principal étant que le seuil BSS est atteint moins rapidement que lorsque les données sont enregistrées en totalité.

Selon un troisième mode de réalisation, les seuils BSS et BSB ou l'un des deux sont définis de manière dynamique en fonction du type de données transmises par le canal.

Ce troisième mode de réalisation est décrit en référence à la figure 5.

Lors d'une étape F1, un utilisateur met son décodeur sous tension et sélectionne un canal de réception grâce à sa télécommande. Lors de la mise sous tension, les paramètres de la mémoire tampon de décalage temporel, BSB et BSS, sont fixés à une taille définie comme minimale. Cette taille est par exemple 1GB pour BSB et 15mn pour BSS. Ces tailles dites minimales peuvent également être paramétrées pour chaque décodeur ou en usine ou par l'utilisateur ou selon le pays d'utilisation du décodeur. Les données reçues sont alors visualisées par l'utilisateur sur un écran de télévision connecté au décodeur (à noter que le décodeur peut être intégré dans le téléviseur et constituer un seul dispositif). Les données sont également enregistrées dans la mémoire tampon de décalage temporel 32 au fur et à mesure de leur réception.

Lors d'une étape F2, le processeur 33 détermine le type de flux reçu. Le flux peut être déterminé en analysant des champs présents dans les données. Lorsque le flux reçu est de type MPEG (acronyme anglais de « Motion Picture Expert Group »), les tables PMT présentes dans le flux permettent de déterminer le type de données contenu dans le flux.

Parmi les types de flux on entend par exemple mais non pas de manière limitative, un flux audio, un flux vidéo HD (haute définition), un flux vidéo SD (définition standard). Pour chaque type de données, on connaît le débit maximal.

On compare alors lors d'une étape F3, avec le flux reçu précédemment, si l'utilisateur vient de changer de chaîne. Si le flux n'est pas du même type que le précédent, le processeur ajuste alors lors d'une étape F4, les paramètres de la mémoire tampon de décalage temporel 32. L'étape F3 est optionnelle, il est également possible de ne pas faire de comparaison avec le flux précédent et d'ajuster les seuils à chaque fois que l'utilisateur change de canal.

Parmi les paramètres à ajuster, on note la limite en temps d'enregistrement BSS, si la limite en capacité est fixée.

Si le type des données (ou le type de chaîne) est choisi parmi

- l'audio (un service radio par exemple),
- la vidéo HD, (un service TV HD par exemple),
- la vidéo SD, (un service TV SD par exemple),

On peut également envisager un service audio HD et un service audio SD.

Si les données sont des données audio, alors les deux seuils sont paramétrés avec les seuils suivants :

BSS=BSS_aud
BSB=BSB_aud

Si les données sont des données vidéo HD, alors les deux seuils sont paramétrés avec les seuils suivants :

BSS=BSS_HD
BSB=BSB_HD

Si les données sont des données vidéo SD, alors les deux seuils sont paramétrés avec les seuils suivants :

BSS=BSS_SD
BSB=BSB_SD

Parmi les paramètres, on peut également ajuster la limite en capacité d'enregistrement UBSB, si la limite en temps est fixée.

Les seuils ainsi définis sont utilisés lors de l'étape E3 en référence à la figure 3.

Afin d'améliorer ce troisième mode de réalisation, il est possible selon une première variante de réduire le débit des données enregistrées.

A cet effet, il est possible d'effectuer un transcodage des données reçues préalablement à leur enregistrement.

A cet effet, les étapes G1 à G5 figurant sur les figures 6a et 6b et décrites précédemment, sont réalisées préalablement à l'étape E3 décrite en référence à la figure E3.

Afin d'améliorer ce troisième mode de réalisation, selon une seconde variante liée à la réduction de débit, une réduction de débit peut être appliquée en enregistrant uniquement certaines parties des données.

Il est possible de réduire les données enregistrées dans la mémoire tampon de décalage temporel en enregistrant uniquement les données audio écoutées et visualisées.

A cet effet, les étapes A1 à A4 figurant sur les figures 7a et 7b et décrites précédemment, sont réalisées préalablement à l'étape E3 décrite en référence à la figure 3.

Selon une troisième variante liée à la réduction de débit, le processeur 33 n'enregistre qu'une partie des groupes de données reçues. Lorsque les données sont conformes aux standards de codage MPEG, par exemple MPEG-2 ou MPEG-4, les données sont codées sous la forme de groupes d'images connus sous l'acronyme GOP (acronyme anglais de « group of pictures).

A cet effet, les étapes H1 à H3 figurant sur les figures 8a et 8b et décrites précédemment, sont réalisées préalablement à l'étape E3 décrite en référence à la figure 3.

Selon une quatrième variante liée à la réduction de débit, le processeur 33 combine une réduction de débit liée au transcodage à une réduction de débit liée à un enregistrement des données sélectionnées par l'utilisateur (langue et sous-titrage). Ainsi, dans un premier temps, le processeur 33 applique une réduction de débit en faisant un transcodage des données reçues selon les étapes décrites en figure 6a ou 6b.

Suite à l'étape G5 de la figure 6a ou 6b on effectue les étapes A3 et A4 de la figure 7a ou 7b et ainsi le flux est transcodé puis seules les données correspondant à la langue écoutée et aux sous-titrages visualisés sont enregistrées dans la mémoire tampon de décalage temporel.

Lorsqu'une telle réduction de débit combinée est utilisée, l'étape A4 est alors suivie de l'étape E3 décrite en référence à la figure 3. L'avantage principal étant que le seuil BSS est atteint moins rapidement que lorsque les données sont enregistrées en totalité.

Selon une cinquième variante liée à la réduction de débit, le processeur 33 combine une réduction de débit liée au transcodage à une réduction de débit liée à un enregistrement partiel des GOPs. Ainsi, dans un premier temps, le processeur 33 applique une réduction de débit en faisant un transcodage des données reçues selon les étapes décrites en figure 6a ou 6b.

Suite à l'étape G5 de la figure 6a ou 6b on effectue l'étape H3 de la figure 8a ou 8b et ainsi le flux est transcodé puis certains GOPs sont enregistrés dans la mémoire tampon de décalage temporel.

Lorsqu'une telle réduction de débit combinée est utilisée, l'étape H3 est alors suivie de l'étape E3 décrite en référence à la figure 3. L'avantage principal étant que le seuil BSS est atteint moins rapidement que lorsque les données sont enregistrées en totalité.

Selon une 6ème variante liée à la réduction de débit, le processeur 33 combine une réduction de débit liée à l'enregistrement des données (langues et sous-titrages) sélectionnées par l'utilisateur à une réduction de débit liée à un enregistrement partiel des GOPs. Ainsi, dans un premier temps, le processeur 33 applique une réduction de débit en faisant une sélection des données effectivement sélectionnées par l'utilisateur et en n'enregistrant pas dans la mémoire tampon de décalage temporel, les données audio et les sous-titrages non utilisés selon les étapes décrites en figure 7a ou 7b.

Suite à l'étape A3 de la figure 7a ou 7b on effectue l'étape H3 de la figure 8a ou 8b et ainsi le débit du flux est doublement réduit.

Lorsqu'une telle réduction de débit combinée est utilisée, l'étape H3 est alors suivie de l'étape E3 décrite en référence à la figure 3. L'avantage principal étant que le seuil BSS est atteint moins rapidement que lorsque les données sont enregistrées en totalité.

Selon une septième variante liée à la réduction de débit, le processeur 33 combine une réduction de débit liée au transcodage à une réduction de débit liée à l'enregistrement des flux effectivement utilisés et à une enregistrement d'un pourcentage des GOPs. Ainsi dans un premier temps, le processeur 33 applique une réduction de débit en faisant un transcodage des données reçues selon les étapes décrites en figure 6a ou 6b.

Ensuite, le processeur 33 applique une réduction de débit en enregistrant uniquement les données effectivement utilisées, en terme de langue et en terme de sous-titrage selon les étape décrites en figure 7a ou 7b. Puis le processeur 33 effectue ensuite une troisième réduction de débit en enregistrant uniquement un pourcentage des GOPs selon les étapes décrites en figure 8a et 8b.

Lorsqu'une telle réduction de débit combinée est utilisée, l'étape H3 est alors suivie de l'étape E3 décrite en référence à la figure 3. L'avantage principal étant que le seuil BSS est atteint moins rapidement que lorsque les données sont enregistrées en totalité.

Nous allons maintenant décrire les spécificités de la seconde invention.

Selon cette invention, le processeur comprend :

- Des moyens de définir un premier seuil définissant une limite en capacité de la mémoire tampon de décalage temporel et
- des moyens de définir un second seuil définissant une limite en temps d'enregistrement dans la mémoire tampon de décalage temporel et
- des moyens de définir un troisième seuil définissant une limite minimale en temps d'enregistrement dans la mémoire tampon de décalage temporel
- le processeur enregistre les données dans la mémoire tampon de décalage temporel tant que l'un au moins du premier seuil ou du second seuil n'est pas atteint et lorsque l'un au moins des deux seuils est atteint :
- si le troisième seuil est également atteint, alors

  ◦ si le pointeur de lecture du processeur se trouve dans une zone de la mémoire tampon de décalage temporel dans laquelle le processeur doit tronquer des données, le processeur repasse en mode lecture normale de la mémoire tampon de décalage temporel si le mode pause était activé ou si la vitesse de lecture était inférieure à la vitesse normale de lecture, et
  ◦ si le pointeur de lecture du processeur ne se trouve pas dans une zone de la mémoire tampon de décalage temporel dans laquelle le processeur doit tronquer des données, alors le processeur tronque des données dans la mémoire tampon de décalage temporel.

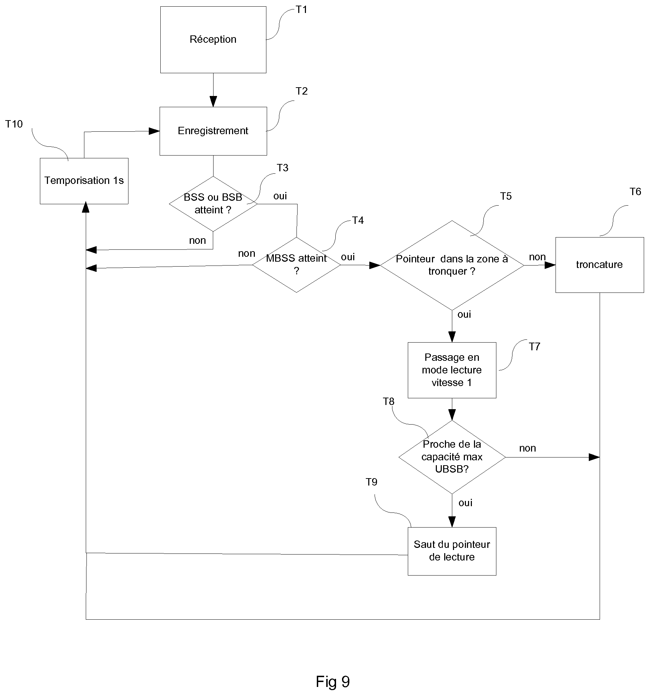

La figure 9 représente un mode de réalisation préféré de cette seconde invention.

Selon ce premier mode de réalisation, les données commencent à être reçues lors d'une étape T1 par le décodeur. L'étape T1 marque le début de la réception des données sur un canal, donc par exemple le changement de chaîne, mais les données continuent à être reçues tout au long des étapes suivantes.

Les données sont enregistrées au fil de leur réception dans la mémoire tampon de décalage temporel, étape T2. Ensuite, lors d'une étape T3, un test est réalisé sur le taux de remplissage de la mémoire tampon. Si l'un des deux seuils BSB ou BSS est atteint, alors si MBSS est également atteint, étape T4, et si le pointeur de lecture se trouve dans la zone à tronquer, étape T5, le décodeur arrête le mode pause et passe en lecture des données à vitesse 1, étape T7. Bien entendu, si le décodeur n'était pas en mode pause (ou en retour rapide, ou en vitesse lente comme le ralenti) mais à une vitesse supérieure à 1, alors on le laisse à cette vitesse (par exemple en accéléré fois 2,4...).

Ensuite, un test est réalisé, lors d'une étape T8, pour voir si le taux de remplissage de la mémoire tampon est proche de la capacité maximale UBSB. Si tel est le cas, alors, le pointeur de lecture fait un saut en avant, étape T9, et les données comprises entre la valeur courante du pointeur de lecture et la nouvelle valeur du pointeur de lecture ne sont donc pas lues. L'utilisateur voit un saut dans l'image, et ce saut doit être minimisé pour éviter les perturbations visuelles des utilisateurs. Grâce à l'invention, de tels sauts arrivent peu fréquemment. La longueur du saut peut dépendre du débit des données, de la capacité UBSB, de la position du pointeur de lecture. La longueur du saut peut être mesurée en taille ou avantageusement en temps, par exemple 10 à 20 secondes.

Si lors de l'étape T8, le décodeur n'est pas proche de la capacité maximale atteinte, alors on repasse à l'étape T2, c'est-à-dire que l'on continue à recevoir les données tout en testant régulièrement les seuils BSB et BSS, ceci en temporisant si besoin, l'étape T10 étant optionnelle.

Si lors de l'étape T5, le pointeur de lecture ne se trouve pas dans la zone à tronquer, alors on passe à l'étape T6 et on tronque le début de la mémoire tampon de décalage temporel. La taille de la troncature dépend également du débit, de la position du pointeur de lecture, de la capacité UBSB...Suite à l'étape T6, on repasse à l'étape T2, en effectuant une temporisation si besoin, étape T10, avant de tester de nouveau les seuils BSS ou BSB.

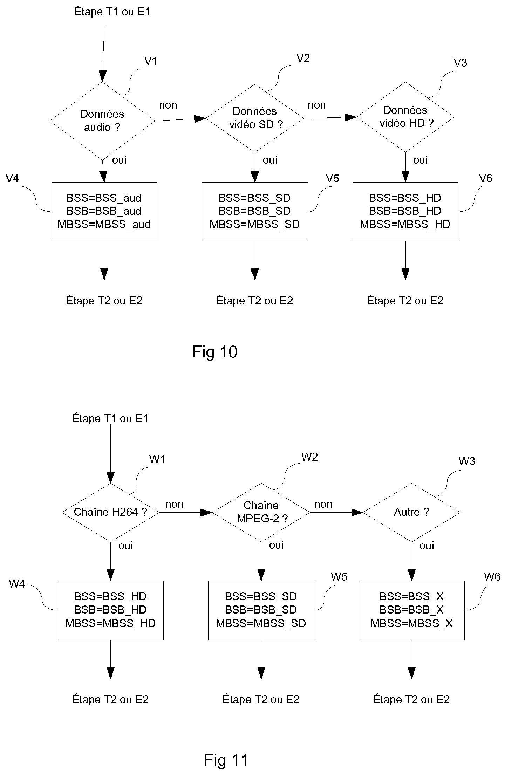

Les figures 10 et 11 décrivent une première variante du mode de réalisation décrit en figure 9.

Dans ces deux variantes, des étapes intermédiaires entre les étapes T1 et T2 de la figure 9 permet de paramétrer les trois seuils BSS, BSB et MBSS en fonction du type de données reçues

La figure 10 illustre cette variante dans laquelle le type des données (ou le type de chaîne) est choisi parmi

- l'audio (un service radio par exemple),
- la vidéo HD, (un service TV HD par exemple),
- la vidéo SD, (un service TV SD par exemple),

On peut également envisager un service audio HD et un service audio SD.

Lors d'un test V1 compris entre les étapes T1 et T2, c'est-à-dire lors de la réception des données, suite à un changement de chaîne, le processeur 33 détermine le type des données reçues. Ce type peut être déterminé par exemple par la lecture de champs d'en-tête ou de métadonnées. Dans le cas de données codées au format MPEG-2 ou MPEG-4, les tables PMT permettent de détecter un tel type de données. Si les données sont des données audio, alors les trois seuils sont paramétrés avec les seuils suivants lors d'une étape V4 :

BSS=BSS_aud
BSB=BSB_aud
MBSS=MBSS_aud

Le débit de données audio est faible comparativement au débit de données vidéo, quelles soient SD ou HD.

Si les données ne sont pas des données audio, alors lors d'une étape V2, le processeur teste si les données sont des données vidéo SD. Si les données sont des données vidéo SD, alors les trois seuils sont paramétrés avec les seuils suivants lors d'une étape V5 :

BSS=BSS_SD
BSB=BSB_SD
MBSS=MBSS_SD

Si les données ne sont pas des données vidéo SD, alors lors d'une étape V3, le processeur teste si les données sont des données vidéo HD. Si les données sont des données vidéo HD, alors les trois seuils sont paramétrés avec les seuils suivants lors d'une étape V6 :

BSS=BSS_HD
BSB=BSB_HD
MBSS=MBSS_HD

Suite au paramétrage des seuils, on passe alors à l'étape T2.

La figure 11 illustre encore cette variante relative au type de données mais la détermination du type de données ne se base pas sur le type audio, vidéo SD, vidéo HD mais sur le type de codage utilisé pour coder les données.

Lors d'un test W1 compris entre les étapes T1 et T2, c'est-à-dire lors de la réception des données, suite à un changement de chaîne, le processeur 33 détermine le type des données reçues. Ce type peut être déterminé par exemple par la lecture de champs d'en-tête ou de métadonnées. Dans le cas de données codées au format MPEG-2 ou MPEG-4 (H264), les tables PMT permettent de détecter un tel type de données. Si les données sont des données H264 alors les trois seuils sont paramétrés avec les seuils suivants lors d'une étape V4 :

BSS=BSS_HD
BSB=BSB_HD
MBSS=MBSS_HD

Si les données ne sont pas des données H264, alors lors d'un test W2, le processeur vérifie si les données sont des données MPEG-2. Si les données sont des données MPEG-2, alors les trois seuils sont paramétrés avec les valeurs suivantes lors d'une étape W5 :

BSS=BSS_SD
BSB=BSB_SD
MBSS=MBSS_SD

Si les données ne sont pas des données MPEG-2, suite au test de l'étape W2, alors les données sont par exemple des données audio mais peuvent être également des données d'un autre type. Lors d'une étape W6, les trois seuils sont paramétrés avec les valeurs suivantes :

BSS=BSS_X
BSB=BSB_X
MBSS=MBSS_X

Suite aux étapes W4, W5 ou W6, le processeur passe à l'étape T2.

Bien entendu, le type de codage n'est pas limité au type MPEG-2 ou H264 mais peut être tout autre type de codage des données, même un codage autre qu'un codage vidéo.

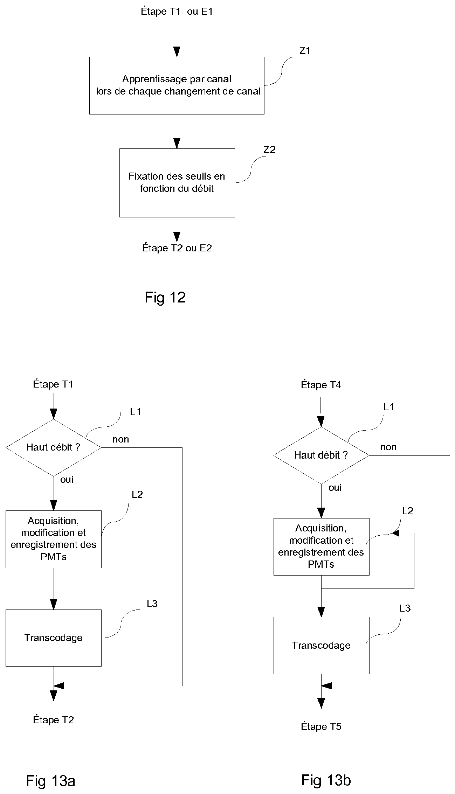

La figure 12 représente une seconde variante du mode de réalisation préféré. Dans cette seconde variante, des étapes intermédiaires entre les étapes T1 et T2 de la figure 9 permettent de paramétrer les trois seuils BSS, BSB et MBSS en fonction du débit des données reçues.

Lors d'une étape Z1, suite à l'étape T1, le processeur détermine le débit moyen des données reçues. Il analyse la rapidité à laquelle se remplit la mémoire tampon de décalage temporel afin d'analyser les débits du canal reçu. Le débit moyen et accessoirement le débit maximum sont des données qui permettent de mieux paramétrer la mémoire tampon de décalage temporel. Ceci peut être fait lors de la réception de chaque canal. L'apprentissage de débit maximal ne se fait pas seulement au moment du zapping courant mais également par cumul des débits calculés lors des changements de chaîne précédents sur ce même service.

Le processeur 33 observe le débit de chaque canal, il peut très bien également observer le débit de plusieurs canaux et faire une moyenne sur ces différents canaux mais dans ce dernier cas, la mesure est moins fiable que canal par canal. Effectuer la mesure sur un ensemble de canaux peut avoir un intérêt si les canaux sont reconnus comme assez similaires en termes de débit. Le débit peut également être une donnée récupérée par exemple sur internet dans le cas de canaux IP plutôt que d'être calculé par le décodeur en interne. Pour des diffusions câble ou satellite, le débit peut également être récupéré par le décodeur, sur un site internet si le décodeur peut aller les récupérer ou sur un site mis en place par l'opérateur ou signalé dans un champ privé de la signalisation, ou service PMT, SDT ou NIT par exemple.

Les différents seuils BSS, BSB, MBSS sont calculés en fonction du seuil lors d'une étape Z2.

De manière préférée, le processeur 33 analyse le débit de chaque canal et paramètre la mémoire tampon de décalage temporel 32 pour chaque canal. Le paramétrage peut être ajusté dynamiquement lorsque l'on regarde un canal ou peut être utilisé lors de la prochaine connexion à ce canal.

Si l'on considère que la variation de débit sur un réseau donné est de 50%, le seuil BSS peut être calculé ainsi :

$$BSS = (UBSB - ((BitRateMoy*1.5)*duréeBitRateMax)) / BitRateMoy \text{ ,}$$

où BitRateMoy est le débit moyen, BitRateMax est le débit maximal et duréeBitRateMax est la durée pendant laquelle on veut pouvoir supporter le débit maximal sans saturation (débordement du buffer) lorsque des conditions de débit maximal surviennent en partant d'un débit moyen.

Lorsque le seuil dépend à a fois du débit moyen et du débit maximum, le seuil BSS peut être calculé ainsi :

$$BSS = (UBSB - (BitRateMax*duréeBitRateMax)) / BitRateMoy$$

Les figures 13a et 13b représentent une quatrième variante de l'invention dans laquelle une réduction de débit est appliquée aux données reçues par le décodeur.

Les étapes des figures 13a et 13b sont identiques.

La figure 13a illustre une réduction de débit faite en amont du procédé illustré par la figure 3 relative à une réduction de débit par transcodage des données.

Suite au début de la réception des données, étape T1 de la figure 9, le débit des données est évalué, étape L1, par exemple en référence aux figures 4,5 ou 6 décrites précédemment ou par l'utilisation de données récupérées du réseau (métadata ou autres). Par débit élevé, on peut entendre par exemple le débit de données codées en HD. Par débit faible, on peut entendre le débit de données audio. Pour des données SD, on peut fixer un seuil en dessous duquel le débit est considéré comme faible.

Si le débit est considéré comme élevé, alors les tables PMT inclues dans le flux sont modifiées et enregistrées Les tables PMT sont enregistrées sous forme de métadonnées dans une base de données de la mémoire 31 et sont réinjectées périodiquement à la relecture. Elles peuvent également être enregistrées avec les données dans la mémoire tampon de décalage temporel mais ceci nécessite de modifier les tables PMT à la relecture pour chaque répétition. Le processeur 33 modifie alors les tables PMT reçues avant de les enregistrer. Les tables PMT sont modifiées pour refléter le nouveau format des données enregistrées et enregistrées en tant que métadata associées à une position dans le flux de données. Le processeur 33 enregistre comme métadata la PMT initiale associée à une position de début de validité et la PMT modifiée associée à la position du début des données transcodées. De même, le processeur 33 gère les versions de table PMT de manière à ce que lors de la relecture, il détecte bien les changements de PMT dues au transcodage et les changements de PMT réels dans le flux.

Par exemple, si le processeur 33 transcode les données entre les instants TO+X et T1-Y, alors, si le flux initial comprend les PMT suivantes :

T0 PMT V2.... T1 PMT V3

dans le flux enregistré et décodé on a les PMT suivantes :

TO PMT V2.... TO+X PMT V3 .....T1-Y PMT V4 ..... T1 PMY V5

A la relecture, la table PMT est injectée périodiquement dans le flux, par exemple toutes les 100ms en fonction de la position. Si le processeur fait des sauts dans le flux, le processeur injecte la PMT précédent la position atteinte. Toute transition de PMT est gérée comme une nouvelle version de PMT dans le flux.

Lors de la relecture, il y a un passage par un écran noir ou un gel de l'image, due à cette transition. Afin de limiter cette transition par un écran noir ou un gel de l'image, il est également possible, pendant un cours instant, d'enregistrer à la fois les données initiales (non transcodée) et les données transcodées bas débit de manière à ce qu'à la relecture il soit possible d'utiliser deux décodeurs vidéo temporairement et basculer d'un décodeur vers l'autre.

Selon une variante de cette étape, les tables PMT ne sont pas modifiées. A cet effet, le processeur 33 utilise des métadatas associées à une position dans le flux, les métadatas contenant toutes les informations nécessaires pour permettre de substituer les données initiales par les données bas débit. De la même manière, il est possible de limiter les écrans noirs ou gel de l'image en enregistrant quelques secondes les données transcodées et non transcodées et en générant les métadatas reflétant ces transitions.

Les données sont transcodées lors d'une étape L3 avant d'être enregistrées dans la mémoire tampon de décalage temporel lors de l'étape T2 décrite précédemment.

La figure 13b illustre le transcodage comme le fait la figure 13a mais lorsque le transcodage est positionné non pas immédiatement lors du changement de canal mais entre les étapes T4 et T5. Les étapes étant identiques à celles de la figure 13a, elles ne sont pas décrites de nouveau ici.

Selon une variante des figures 13a et 13b, l'étape L1 est optionnelle et le transcodage peut être effectué tout le temps, sans condition de débit.

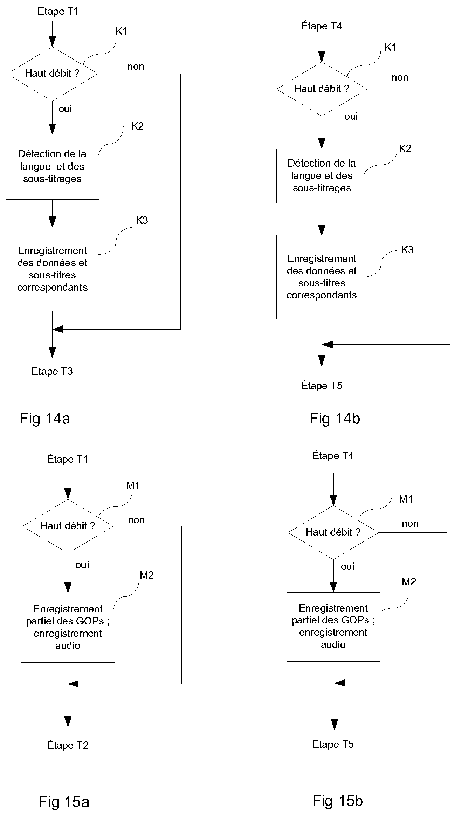

Les figures 14a et 14b décrivent une cinquième variante de l'invention dans laquelle une réduction de débit est également appliquée aux données reçues mais selon cette réduction de débit, un enregistrement partiel des données est réalisé.

Lorsque les données reçues sont des données audio vidéo et des sous-titres, les données sont parfois reçues dans différentes langues audio avec également plusieurs choix de sous-titres. Or, l'utilisateur change rarement la langue écoutée en cours de programme, ni le sous-titrage. Il est donc possible de réduire les données enregistrées dans la mémoire tampon de décalage temporel en enregistrant uniquement les données audio écoutées et visualisées. Ceci est également valable dans le cas de multiples vidéos.

Lorsque les données sont considérées comme haut débit, comme décrit en référence à l'étape L1 précédemment (l'étape K1 est identique à l'étape L1), lors d'une étape K2, le processeur 33 détecte la langue audio sélectionnée par l'utilisateur et détecte les sous-titres visualisés. Lors d'une étape K3, le processeur 33 n'enregistre dans la mémoire tampon de décalage temporel que les données reçues dont la langue correspond à celle sélectionnée et les sous-titres choisis par l'utilisateur

Afin de refléter les données telles qu'enregistrées, c'est-à-dire modifiées, les tables PMT sont modifiées lors de l'enregistrement des données modifiées auxquelles elles renvoient.

La figure 14b illustre la réduction de débit comme faite en figure 8a mais positionnée non pas immédiatement lors du changement de canal mais entre les étapes T4 et T5. Les étapes étant identiques à celles de la figure 14a, elles ne sont pas décrites de nouveau ici.

Selon une variante des figures 14a et 14b, l'étape K1 est optionnelle et la réduction de débit peut être effectuée tout le temps, sans condition de débit.

Les figures 15a et 15b décrivent une sixième variante de l'invention dans laquelle une réduction de débit est également appliquée aux données reçues mais selon cette réduction de débit, seul un pourcentage des GOPs est enregistré.

Lorsque les données sont considérées comme haut débit, comme décrit en référence à l'étape L1 précédemment (l'étape M1 est identique à l'étape L1), lors d'une étape M2, le processeur 33 décide de n'enregistrer qu'un pourcentage des GOPs vidéo reçus.

Le pourcentage de GOP enregistré varie en fonction du débit des données reçues. On enregistre par exemple 3 GOPs sur 4 reçus. Les GOPs sont délimités par l'indexation des images de type intra (I) ou des images de type IDR pour les données conformes au standard de codage MPEG4. Par contre, afin d'avoir un son correct, toutes les données audio sont enregistrées. Ainsi à la lecture de la mémoire tampon de stockage temporel, les données vidéos varient lentement (il y a des gels de l'image pour les GOPs manquants) mais le son et les sous-titres sont restitués intégralement.

La figure 15b illustre la réduction de débit par enregistrement partiel des GOPs comme le fait la figure 15a mais lorsque la réduction de débit est positionnée non pas immédiatement lors du changement de canal mais entre les étapes T4 et T5. Les étapes étant identiques à celles de la figure 15a, elles ne sont pas décrites de nouveau ici.

Selon une variante des figures 15a et 15b, l'étape M1 est optionnelle et l'enregistrement d'un pourcentage des GOPs peut être effectué tout le temps, sans condition de débit.

Selon le débit observé, il est également possible de combiner les réductions de débit entre elles, en combinant une, deux ou trois réductions de débit simultanément comme décrites précédemment.

Nous allons maintenant décrire les spécificités de la troisième invention.

Le procédé selon la troisième invention consiste à effectuer les étapes F1 à F4 de la figure 5 décrite précédemment.

Selon un mode préféré, cette troisième invention concerne un dispositif de réception et d'enregistrement de données sur un support d'enregistrement, le dispositif comprenant un processeur pour implémenter une fonction de décalage temporel dans une partie dudit support d'enregistrement appelé mémoire tampon de décalage temporel. Selon l'invention, le dispositif comprend :

des moyens de détection du type de données reçues, et des moyens d'ajuster une limite en temps d'enregistrement dans la mémoire tampon de décalage temporel en fonction dudit type de données reçues.

Avantageusement, selon une première variante liée à la réduction de débit, un transcodage des données est effectué lors de la réception des données.

Les figures 6a et 6b décrites précédemment illustrent cette variante. Les étapes G4 et G5 peuvent être effectuées avant ou après l'étape F2.

Avantageusement, selon une seconde variante liée à la réduction de débit, une réduction de débit peut être appliquée en enregistrant uniquement certaines parties des données. Les figures 7a et 7b décrites précédemment illustrent une telle variante. Les étapes A3 et A4 peuvent être effectuées avant ou après l'étape F2.

Avantageusement, selon une troisième variante liée à la réduction de débit, le processeur 33 n'enregistre qu'une partie des groupes de données reçues. Lorsque les données sont conformes aux standards de codage MPEG, par exemple MPEG-2 ou MPEG-4, les données sont codées sous la forme de groupes d'images connus sous l'acronyme GOP (acronyme anglais de « Group Of Pictures).

Les figures 8a et 8b décrites précédemment illustrent ce mode de réalisation. L'étape H3 peut être effectuée avant ou après l'étape F2.

La figure 3 décrite précédemment représente également un mode de réalisation particulier de cette invention.

La figure 9 décrite précédemment représente également un mode de réalisation particulier de cette invention.

Nous allons maintenant décrire les spécificités de la quatrième invention.

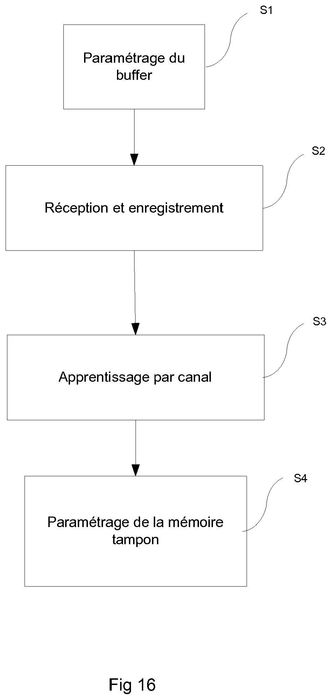

Le procédé selon la quatrième invention consiste à effectuer les étapes de la figure 16.

Selon un mode préféré, cette quatrième invention concerne un dispositif de réception et d'enregistrement de données sur un support d'enregistrement, le dispositif comprenant un processeur pour implémenter une fonction de décalage temporel dans une partie du support d'enregistrement appelée mémoire tampon de décalage temporel ; le processeur comprenant :

- des moyens d'initialiser la mémoire tampon de manière à rendre sa capacité en temps d'enregistrement égale à un seuil fixé,
- des moyens d'analyser lors de chaque réception d'un canal de données au moins le débit moyen de chaque canal,
- des moyens d'ajuster la capacité en temps d'enregistrement de la mémoire tampon à une valeur supérieure à la valeur de seuil en fonction du au moins débit moyen.

Lors d'une étape S1, un utilisateur met son décodeur sous tension et sélectionne un canal de réception grâce à sa télécommande. Lors de la mise sous tension, les paramètres de la mémoire tampon de décalage temporel BSB et BSS sont fixés à une taille définie comme minimale. Cette taille est par exemple 1GB pour BSB et 15mn pour BSS. Ces tailles dites minimales peuvent également être paramétrées pour chaque décodeur ou en usine ou par l'utilisateur ou selon le pays d'utilisation du décodeur ou le réseau de diffusion sur lequel le décodeur est connecté. Les données reçues sont alors visualisées par l'utilisateur sur un écran de télévision connecté au décodeur (à noter que le décodeur peut être intégré dans le téléviseur et constituer un seul dispositif). Les données sont également enregistrées dans la mémoire tampon de décalage temporel 32 au fur et à mesure de leur réception, étape S2.

Lors d'une étape S3, le processeur 33 analyse la rapidité à laquelle se remplit la mémoire tampon de décalage temporel afin d'analyser les débits du canal reçu. Le débit moyen et accessoirement le débit maximum sont des données qui permettent de mieux paramétrer la mémoire tampon de décalage temporel. Ceci peut être fait lors de la réception de chaque canal.

Le processeur 33 observe le débit de chaque canal, il peut très bien également observer le débit de plusieurs canaux et faire une moyenne sur ces différents canaux mais dans ce dernier cas, la mesure est moins fiable que canal par canal. Effectuer la mesure sur un ensemble de canaux peut avoir un intérêt si les canaux sont reconnus comme assez similaires en terme de débit.

De manière préférée, le processeur 33 analyse le débit de chaque canal et paramètre la mémoire tampon de décalage temporel 32 pour chaque canal. Le paramétrage peut être ajusté dynamiquement lorsque l'on regarde un canal ou peut être utilisé lors de la prochaine connexion à ce canal pour fixer la valeur de seuil de départ au lieu de la fixer à une valeur minimale.

Le seuil BSS est ainsi ajusté en fonction du débit moyen. Toutefois, si le canal présente de fortes variations de débit, il est également intéressant d'ajuster le seuil BSS en fonction du débit maximal du canal.

Si l'on considère que la variation de débit sur un réseau donné est de 50%, le seuil BSS peut être calculé ainsi :

$$BSS = (UBSB - ((BitRateMoy*1.5)*duréeBitRateMax)) / BitRateMoy$$

Lorsque le seuil dépend à a fois du débit moyen et du débit maximum, le seuil BSS peut être calculé ainsi :

$$BSS = (UBSB - (BitRateMax*duréeBitRateMax)) / BitRateMoy$$

Selon une autre variante, le seuil BSB représentant la limite en capacité de la mémoire tampon de décalage temporel est également paramétré en fonction du débit moyen.

Selon une autre variante, le seuil BSB est également paramétré en fonction du débit moyen et du débit maximal.

De manière avantageuse, une réduction de débit peut en outre être combinée à ce mode de réalisation et à ses variantes. En effet, si l'on parvient à réduire le débit, alors l'utilisateur peut bénéficier d'une limite en temps d'enregistrement supérieure ou du moins dans un temps identique, il est possible de mettre plus de données reçues.

Selon une première variante liée à la réduction de débit, un transcodage des données est effectué lors de la réception des données.

Les figures 6a et 6b décrites précédemment illustrent cette variante. Les étapes G3 (respectivement G'3) à G5 sont alors insérées avant ou après les étapes S3 et S4.

Selon une seconde variante liée à la réduction de débit, une réduction de débit peut être appliquée en enregistrant uniquement certaines parties des données. Les figures 7a et 7b illustrent une telle variante. Les étapes A2 (respectivement A'2) à A4 sont alors insérées avant ou après les étapes S3 et S4.

Selon une troisième variante liée à la réduction de débit, le microprocesseur 33 n'enregistre qu'une partie des groupes de données reçues. Lorsque les données sont conformes aux standards de codage MPEG, par exemple MPEG-2 ou MPEG-4, les données sont codées sous la forme de groupes d'images connus sous l'acronyme GOP (acronyme anglais de « group of pictures).

Les figures8a et 8b illustrent ce mode de réalisation. Les étapes H2 (respectivement H'2) et H3 sont alors insérées avant ou après les étapes S3 et S4.

La figure 3 décrite précédemment représente également un mode de réalisation particulier de cette invention.

La figure 9 décrite précédemment représente également un mode de réalisation particulier de cette invention.

Nous allons maintenant décrire les spécificités de la cinquième invention.

Le procédé selon la cinquième invention consiste à effectuer les étapes de la figure 6a ou 6b.

Selon un mode préféré, cette cinquième invention concerne un dispositif de réception et d'enregistrement de données audio vidéo sur un support d'enregistrement, le dispositif comprenant un processeur pour implémenter une fonction de décalage temporel dans une partie dudit support d'enregistrement appelée mémoire tampon de décalage temporel. Selon cette invention, le processeur comprend des moyens de transcoder les données reçues afin de réduire la quantité de données à enregistrer avant de les enregistrer dans la mémoire tampon de décalage temporel.

Avantageusement, une réduction de débit supplémentaire peut être appliquée en enregistrant uniquement certaines parties des données. Les figures 7a et 7b, décrites précédemment illustrent une telle variante. Cette réduction de débit supplémentaire peut être faite avant ou après la réduction de débit par transcodage.

Avantageusement, une réduction de débit supplémentaire peut être appliquée en enregistrant uniquement certains groupes de données. Les figures 8a et 8b décrites précédemment, illustrent une telle variante. Cette réduction de débit supplémentaire peut être faite avant ou après la réduction de débit par transcodage.

La figure 3, décrite précédemment, décrit une gestion à deux seuils de la mémoire tampon de décalage temporel applicable suite au transcodage des données selon les figures 6a ou 6b et selon les variantes décrites précédemment.

La figure 9 décrit une gestion à 4 seuils de la mémoire tampon de décalage temporel applicable suite au transcodage des données selon les figures 6a ou 6b et selon les variantes décrites précédemment.

Les figures 10 et 11 décrivent deux premières variantes du mode de réalisation décrit en figures 3 et 9.

Dans ces deux variantes, des étapes intermédiaires entre les étapes T1 et T2 de la figure 9 ou E1 et E2 de la figure 3 permettent de paramétrer les trois seuils BSS, BSB et MBSS en fonction du type de données reçues.

La figure 10 illustre cette variante dans laquelle le type des données (ou le type de chaîne) est choisi parmi

- l'audio (un service radio par exemple),
- la vidéo HD, (un service TV HD par exemple),
- la vidéo SD, (un service TV SD par exemple),

On peut également envisager un service audio HD et un service audio SD.

Lors d'un test V1 compris entre les étapes T1 et T2, c'est-à-dire lors de la réception des données, suite à un changement de chaîne, le processeur 33 détermine le type des données reçues. Ce type peut être déterminé par exemple par la lecture de champs d'en-tête ou de métadonnées. Dans le cas de données codées au format MPEG-2 ou MPEG-4, les tables PMT permettent de détecter un tel type de données. Si les données sont des données audio alors les trois seuils sont paramétrés avec les seuils suivants lors d'une étape V4 :

BSS=BSS_aud
BSB=BSB_aud
MBSS=MBSS_aud

Le débit de données audio est faible comparativement au débit de données vidéo, quelles soient SD ou HD.
Si les données ne sont pas des données audio, alors lors d'une étape V2, le processeur teste si les données sont des données vidéo SD. Si les données sont des données vidéo SD, alors les trois seuils sont paramétrés avec les seuils suivants lors d'une étape V5 :

BSS=BSS_SD
BSB=BSB_SD
MBSS=MBSS_SD

Si les données ne sont pas des données vidéo SD, alors lors d'une étape V3, le processeur teste si les données sont des données vidéo HD. Si les données sont des données vidéo HD, alors les trois seuils sont paramétrés avec les seuils suivants lors d'une étape V6 :

BSS=BSS_HD
BSB=BSB_HD
MBSS=MBSS_HD

Suite au paramétrage des seuils, on passe alors à l'étape T2.
La figure 11 illustre encore cette variante relative au type de données mais la détermination du type de données ne se base pas sur le type audio, vidéo SD, vidéo HD mais sur le type de codage utilisé pour coder les données.
Lors d'un test W1 compris entre les étapes T1 et T2, c'est-à-dire lors de la réception des données, suite à un changement de chaîne, le processeur 33 détermine le type des données reçues. Ce type peut être déterminé par exemple par la lecture de champs d'en-tête ou de métadonnées. Dans le cas de données codées au format MPEG-2 ou MPEG-4 (H264), les tables PMT permettent de détecter un tel type de données. SI les données sont des données H264 alors les trois seuils sont paramétrés avec les seuils suivants lors d'une étape V4 :

BSS=BSS_HD
BSB=BSB_HD
MBSS=MBSS_HD

Si les données ne sont pas des données H264, alors lors d'un test W2, le processeur vérifie si les données sont des données MPEG-2. Si les données sont des données MPEG-2, alors les trois seuils sont paramétrés avec les valeurs suivantes lors d'une étape W5 :

BSS=BSS_SD
BSB=BSB_SD
MBSS=MBSS_SD

Si les données ne sont pas des données MPEG-2, suite au test de l'étape W2, alors les données sont par exemple des données audio mais peuvent être également des données d'un autre type. Lors d'une étape W6, les trois seuils sont paramétrés avec les valeurs suivantes :

BSS=BSS_X
BSB=BSB_X
MBSS=MBSS_X

Suite aux étapes W4, W5 ou W6, le processeur passe à l'étape T2, s'il venait de T1 ou E2 s'il venait de E1.
La figure 12, décrite précédemment, représente une variante de l'invention. Dans cette seconde variante, des étapes intermédiaires entre les étapes T1 et T2 de la figure 7 ou E1 et E2 de la figure 6 permettent de paramétrer les trois seuils BSS, BSB et MBSS en fonction du débit des données reçues

Nous allons maintenant décrire les spécificités de la sixième invention.

Le procédé selon la sixième invention consiste à effectuer les étapes de la figure 7a ou 7b.

Selon un mode préféré, cette sixième invention concerne un dispositif de réception et d'enregistrement de données audio vidéo sur un support d'enregistrement, le dispositif comprenant un processeur pour implémenter une fonction de décalage temporel dans une partie dudit support d'enregistrement appelée mémoire tampon de décalage temporel, les données étant codées dans une pluralité de modes, les modes étant relatifs à une langue audio ou à un sous-titrage. Selon cette sixième invention, le processeur comprend

- Des moyens de détecter le mode dans lequel les données sont décodées,
- Des moyens d'enregistrer dans la mémoire tampon de décalage temporel, les données uniquement dans le seul mode décodé.

Selon une variante liée à la réduction de débit, le microprocesseur 33 n'enregistre qu'une partie des groupes de données reçues. Lorsque les données sont conformes aux standards de codage MPEG, par exemple MPEG-2 ou MPEG-4, les données sont codées sous la forme de groupes d'images connus sous l'acronyme GOP (acronyme anglais de « group of pictures).

Les figures 8a et 8b illustrent ce mode de réalisation. Cette réduciton de débit supplémentaire peut être effectuée avant ou après la réduction de débit liée au mode décodé.

Une réduction de débit supplémentaire peut être appliquée en transcodant les données reçues. Les figures 6a et 6b décrites précédemment illustrent ce mode de réalisation. Cette réduciton de débit supplémentaire peut être effectuée avant ou après la réduction de débit liée au mode décodé.

La figure 3, décrite précédemment, décrit une gestion à deux seuils de la mémoire tampon de décalage temporel applicable suite à la réduciton de débit appliquée aux données selon les figures 7a ou 7b et selon les variantes décrites précédemment.

La figure 9 décrit une gestion à 4 seuils de la mémoire tampon de décalage temporel applicable suite à la réduciton de débit appliquée aux données selon les figures 7a ou 7b et selon les variantes décrites précédemment.

Les figures 10 et 11 décrivent deux premières variantes du mode de réalisation décrit en figures 3 et 9.

Dans ces deux variantes, des étapes intermédiaires entre les étapes T1 et T2 de la figure 9 ou E1 et E2 de la figure 3 permettent de paramétrer les trois seuils BSS, BSB et MBSS en fonction du type de données reçues.

La figure 12, décrite précédemment, représente une variante de l'invention. Dans cette seconde variante, des étapes intermédiaires entre les étapes T1 et T2 de la figure 7 ou E1 et E2 de la figure 6 permettent de paramétrer les trois seuils BSS, BSB et MBSS en fonction du débit des données reçues.

Nous allons maintenant décrire les spécificités de la septième invention.

Le procédé selon la septième invention consiste à effectuer les étapes de la figure 8a ou 8b.

Selon un mode préféré, cette septième invention concerne un dispositif de réception et d'enregistrement de données sur un support d'enregistrement, le dispositif comprenant un processeur pour implémenter une fonction de décalage temporel dans une partie dudit support d'enregistrement appelée mémoire tampon de décalage temporel, les données étant des données audio vidéo codées en groupes de données vidéos et en groupe de données audio. Selon cette invention, le dispositif comprend des moyens de n'enregistrer dans la mémoire qu'un pourcentage inférieur à la totalité des groupes de données vidéo reçus et tous les groupes de données audio.

Avantageusement, une réduction de débit supplémentaire peut être appliquée en enregistrant uniquement certaines parties des données. Les figures 7a et 7b, décrites précédemment illustrent une telle variante. Cette réduciton de débit supplémentaire peut être effectuée avant ou après la réduction de débit liée au mode décodé.

Avantageusement, une réduction de débit supplémentaire supplémentaire peut être appliquée en transcodant les données reçues. Les figures 6a et 6b décrites précédemment illustrent ce mode de réalisation. Cette réduciton de débit supplémentaire peut être effectuée avant ou après la réduction de débit liée au mode décodé.

La figure 3, décrite précédemment, décrit une gestion à deux seuils de la mémoire tampon de décalage temporel applicable suite à la réduciton de débit appliquée aux données selon les figures 7a ou 7b et selon les variantes décrites précédemment.

La figure 9 décrit une gestion à 4 seuils de la mémoire tampon de décalage temporel applicable suite à la réduciton de débit appliquée aux données selon les figures 7a ou 7b et selon les variantes décrites précédemment.

Les figures 10 et 11 décrivent deux premières variantes du mode de réalisation décrit en figures 3 et 9.

Dans ces deux variantes, des étapes intermédiaires entre les étapes T1 et T2 de la figure 9 ou E1 et E2 de la figure 9 permettent de paramétrer les trois seuils BSS, BSB et MBSS en fonction du type de données reçues.

La figure 12, décrite précédemment, représente une variante de l'invention. Dans cette seconde variante, des étapes intermédiaires entre les étapes T1 et T2 de la figure 7 ou E1 et E2 de la figure 6 permettent de paramétrer les trois seuils BSS, BSB et MBSS en fonction du débit des données reçues

**Revendications**

1. Dispositif de réception et d'enregistrement de données sur un support d'enregistrement, le dispositif comprenant un processeur pour implémenter une fonction de décalage temporel, permettant, simultanément à un enregistrement de données reçues dans une mémoire tampon de décalage temporel dudit support d'enregistrement, une lecture différée de données stockées dans la mémoire tampon de décalage temporel, ladite fonction d'enregistrement comprenant :

quand le pointeur de lecture ne se trouve pas en début de la mémoire tampon de décalage temporel, tronquer ledit début de la mémoire tampon de décalage temporel, lorsqu'une quantité de données enregistrées dans la mémoire tampon de décalage temporel atteint une première valeur (BSB), alors qu'une durée de stockage des données reçues dans la mémoire tampon de décalage temporel n'atteint pas une seconde valeur (BSS), ou lorsque la durée de stockage des données reçues dans la mémoire tampon de décalage temporel atteint la seconde valeur (BSS); et
- quand le pointeur de lecture se trouve en début de la mémoire tampon de décalage temporel, vérifier que le dispositif est en mode lecture des données de la mémoire tampon de décalage temporel, avec une vitesse de lecture égale ou supérieure à une vitesse de lecture normale, et passer sinon le dispositif en mode lecture à la vitesse de lecture normale, lorsque la durée de stockage des données reçues dans la mémoire tampon de décalage temporel atteint la seconde valeur (BSS);

où le début de la mémoire tampon de décalage temporel correspond à une pluralité d'adresses de ladite mémoire tampon de décalage temporel, le nombre d'adresses de ladite pluralité d'adresses étant dépendant du débit d'entrée des données ou proportionnel à la taille de ladite mémoire tampon de décalage temporel.

2. Procédé de réception et d'enregistrement de données sur un support d'enregistrement, dans un dispositif comprenant un processeur pour implémenter une fonction de décalage temporel permettant, simultanément à un enregistrement de données reçues dans une mémoire tampon de décalage temporel dudit support d'enregistrement, une lecture différée de données stockées dans la mémoire tampon de décalage temporel, ladite fonction d'enregistrement comprenant :

- quand le pointeur de lecture ne se trouve pas en début de la mémoire tampon de décalage temporel, tronquer ledit début de la mémoire tampon de décalage temporel, lorsqu'une quantité de données enregistrées dans la mémoire tampon de décalage temporel atteint une première valeur (BSB), alors qu'une durée de stockage des données reçues dans la mémoire tampon de décalage temporel n'atteint pas une seconde valeur (BSS), ou lorsque la durée de stockage des données reçues dans la mémoire tampon de décalage temporel atteint la seconde valeur (BSS); et
- quand le pointeur de lecture se trouve en début de la mémoire tampon de décalage temporel, vérifier que le dispositif est en mode lecture des données de la mémoire tampon de décalage temporel, avec une vitesse de lecture au moins égale ou supérieure à une vitesse de lecture normale, et passer sinon le dispositif en mode lecture à la vitesse de lecture normale, lorsque la durée de stockage des données reçues dans la mémoire tampon de décalage temporel atteint la seconde valeur (BSS);

où le début de la mémoire tampon de décalage temporel correspond à une pluralité d'adresses de ladite mémoire tampon de décalage temporel, le nombre d'adresses de ladite pluralité d'adresses étant dépendant du débit d'entrée des données ou proportionnel à la taille de ladite mémoire tampon de décalage temporel.

3. Dispositif selon la revendication 1 **caractérisé en ce que** le processeur est configuré pour, ou procédé selon la revendication 2 **caractérisée en ce que** le procédé comprend :

- analyser, lors de chaque réception d'un canal de données, un débit moyen de chaque canal,
- ajuster la première valeur (BSB) de quantité de données enregistrées et /ou la seconde valeur (BSS) de durée de stockage en fonction dudit débit moyen.

4. Dispositif selon la revendication 1 ou 3, ou procédé selon la revendication 2ou 3, **caractérisé en ce que** :

- analyser le débit moyen comprend analyser un débit maximal de chaque canal, et
- ajuster la seconde valeur (BSS) de durée de stockage est fonction dudit débit moyen et du débit maximal de chaque canal.

5. Dispositif selon l'une au moins des revendications 1, 3 ou 4, ou procédé selon l'une au moins des revendications 2 à 4, **caractérisé en ce que** :

   - analyser le débit moyen comprend analyser un débit maximal de chaque canal, et
   - la première valeur (BSB) de quantité de données enregistrées est ajustée pour chaque canal en fonction de son débit moyen et de son débit maximal.

6. Dispositif selon l'une quelconque des revendications 1 et 3 à 5 **caractérisé en ce que** le processeur est configuré pour, ou procédé selon l'une au moins des revendications 2 à 5, **caractérisé en ce que** le procédé comprend :

   - analyser le type des données reçues,
   - ajuster la seconde valeur (BSS) de durée de stockage en fonction du type de données reçues.

7. Dispositif ou Procédé selon la revendication 6 **caractérisé en ce que** le type de données reçues appartient à un groupe comprenant :

   - Des données audio,
   - Des données vidéo de définition standard,
   - Des données vidéo haute définition.

8. Dispositif selon l'une au moins des revendications 1 et 3 à 7, **caractérisé en ce que** le processeur est configuré pour, ou procédé selon l'une au moins des revendications 2 à 7, **caractérisé en ce que** le procédé comprend : détecter que la durée de stockage dans la mémoire tampon de décalage temporel atteint une troisième valeur MBSS.

9. Dispositif selon l'une au moins des revendications 1 et 3 à 8, **caractérisé en ce que** le processeur est configuré pour ou procédé selon l'une au moins des revendications 2 à 8, **caractérisé en ce que** le procédé comprend :

   - détecter les données relatives à la langue visualisée par l'utilisateur et/ou au sous-titrage regardé par l'utilisateur,
   - n'enregistrer dans la mémoire tampon de décalage temporel que les données détectées.

10. Dispositif ou Procédé selon les revendications 8 et 9 **caractérisé en ce que** détecter les données relatives à une langue et/ou à un sous-titrage et n'enregistrer que les données détectées sont mises en œuvre lorsque la durée de stockage atteint la troisième valeur MBSS.

11. Dispositif selon la revendication 8 ou 10 **caractérisé en ce que** le processeur est configuré pour, ou procédé selon la revendication 8 ou 10 **caractérisé en ce que** le procédé comprend, initier un transcodage des données reçues lorsque la durée de stockage atteint la troisième valeur MSBB.

12. Dispositif selon la revendication 11 **caractérisé en ce que** le processeur est configuré pour, ou procédé selon la revendication 11 **caractérisé en ce que** le procédé comprend :
    une fois le transcodage initié, transcoder les données reçues tant que la durée de stockage dans la mémoire tampon est supérieure à une quatrième valeur supérieure à ladite seconde valeur.

13. Dispositif ou procédé selon la revendication 11 ou 12 **caractérisé en ce que** lesdites données reçues sont codées en groupe d'images et **en ce que** le processeur est configuré pour, ou le procédé comprend, enregistrer dans la mémoire tampon de décalage temporel uniquement un pourcentage inférieur à la totalité des groupes d'images reçus lorsque la durée de stockage franchie atteint la troisième valeur MBSS.

**Patentansprüche**

1. Vorrichtung zum Empfang und zur Aufzeichnung von Daten auf einem Aufzeichnungsmedium, wobei die Vorrichtung einen Prozessor zum Implementieren einer Zeitverschiebungsfunktion umfasst, die zeitgleich zu einer Aufzeichnung von Daten, die in einem Zeitverschiebungspuffer des besagten Aufzeichnungsmediums empfangen werden, eine zeitversetzte Lesung von in dem Zeitverschiebungspuffer gespeicherten Daten ermöglicht, wobei die besagte Aufzeichnungsfunktion umfasst:

- wenn sich der Lesezeiger nicht am Anfang des Zeitverschiebungspuffers befindet, Trunkieren des besagten Anfangs des Zeitverschiebungspuffers, wenn eine Menge von in dem Zeitverschiebungspuffer aufgezeichneten Daten einen ersten Wert (BSB) erreicht, während eine Speicherungsdauer der in dem Zeitverschiebungspuffer empfangenen Daten einen zweiten Wert (BSS) nicht erreicht, oder wenn die Speicherungsdauer der in dem Zeitverschiebungspuffer empfangenen Daten den zweiten Wert (BSS) erreicht;
- wenn sich der Lesezeiger am Anfang des Zeitverschiebungspuffers befindet, Sicherstellung, dass sich die Vorrichtung im Lesemodus der Daten des Zeitverschiebungspuffers befindet, mit einer Lesegeschwindigkeit, die mindestens einer normalen Lesegeschwindigkeit entspricht, und anderenfalls Schaltung der Vorrichtung in den Lesemodus mit normaler Geschwindigkeit, wenn die Speicherungsdauer der in dem Zeitverschiebungspuffer empfangenen Daten den zweiten Wert (BSS) erreicht;

bei der der Anfang des Zeitverschiebungspuffers einer Vielzahl von Adressen des besagten Zeitverschiebungspuffers entspricht, wobei die Adressenanzahl der besagten Vielzahl von Adressen von der Eingangsrate der Daten abhängt oder proportional zur Größe des besagten Zeitverschiebungspuffers ist.

2. Verfahren zum Empfang und zur Aufzeichnung von Daten auf einem Aufzeichnungsmedium, in einer Vorrichtung, die einen Prozessor zum Implementieren einer Zeitverschiebungsfunktion umfasst, die zeitgleich zu einer Aufzeichnung von Daten, die in einem Zeitverschiebungspuffer des besagten Aufzeichnungsmediums empfangen werden, eine zeitversetzte Lesung von in dem Zeitverschiebungspuffer gespeicherten Daten ermöglicht, wobei die Aufzeichnungsfunktion umfasst:

- wenn sich der Lesezeiger nicht am Anfang des Zeitverschiebungspuffers befindet, Trunkieren des besagten Anfangs des Zeitverschiebungspuffers, wenn eine Menge von in dem Zeitverschiebungspuffer aufgezeichneten Daten einen ersten Wert (BSB) erreicht, während eine Speicherungsdauer der in dem Zeitverschiebungspuffer empfangenen Daten einen zweiten Wert (BSS) nicht erreicht, oder wenn die Speicherungsdauer der in dem Zeitverschiebungspuffer empfangenen Daten den zweiten Wert (BSS) erreicht;
- wenn sich der Lesezeiger am Anfang des Zeitverschiebungspuffers befindet, Sicherstellung, dass sich die Vorrichtung im Lesemodus der Daten des Zeitverschiebungspuffers befindet, mit einer Lesegeschwindigkeit, die mindestens einer normalen Lesegeschwindigkeit entspricht, und anderenfalls Schaltung der Vorrichtung in den Lesemodus mit normaler Lesegeschwindigkeit, wenn die Speicherungsdauer der in dem Zeitverschiebungspuffer empfangenen Daten den zweiten Wert (BSS) erreicht;

bei dem der Anfang des Zeitverschiebungspuffers einer Vielzahl von Adressen des besagten Zeitverschiebungspuffers entspricht, wobei die Adressenanzahl der besagten Vielzahl von Adressen von der Eingangsrate der Daten abhängt oder proportional zur Größe des besagten Zeitverschiebungspuffers ist.

3. Vorrichtung nach Anspruch 1, **dadurch gekennzeichnet, dass** der Prozessor konfiguriert ist für, oder Verfahren nach Anspruch 2, **dadurch gekennzeichnet, dass** das Verfahren umfasst:

- die Analyse einer durchschnittlichen Rate jedes Kanals bei jedem Empfang eines Datenkanals,
- die Anpassung des ersten Werts (BSB) der Menge von aufgezeichneten Daten und/oder des zweiten Werts (BSS) der Speicherungsdauer in Abhängigkeit von der besagten durchschnittlichen Rate.

4. Vorrichtung nach Anspruch 1 oder 3, oder Verfahren nach Anspruch 2 oder 3, **dadurch gekennzeichnet, dass**:

- die Analyse der durchschnittlichen Rate die Analyse einer maximalen Rate jedes Kanals umfasst, und
- die Anpassung des zweiten Werts (BSS) der Speicherungsdauer von der besagten durchschnittlichen Rate und von der maximalen Rate jedes Kanals abhängig ist.

5. Vorrichtung nach mindestens einem der Ansprüche 1, 3 oder 4, oder Verfahren nach mindestens einem der Ansprüche 2 bis 4, **dadurch gekennzeichnet, dass**:

- die Analyse der durchschnittlichen Rate die Analyse einer maximalen Rate jedes Kanals umfasst, und
- der erste Wert (BSB) der Menge von aufgezeichneten Daten für jeden Kanal entsprechend seiner durchschnittlichen Rate und seiner maximalen Rate angepasst wird.

6. Vorrichtung nach einem der Ansprüche 1 und 3 bis 5, **dadurch gekennzeichnet, dass** der Prozessor konfiguriert ist für, oder Verfahren nach mindestens einem der Ansprüche 2 bis 5, **dadurch gekennzeichnet, dass** das Verfahren umfasst:

- die Analyse des Typs der empfangenen Daten,
- die Anpassung des zweiten Werts (BSS) der Speicherungsdauer entsprechend dem Typ empfangener Daten.

7. Vorrichtung oder Verfahren nach Anspruch 6, **dadurch gekennzeichnet, dass** der Typ empfangener Daten zu einer Gruppe gehört, die umfasst:

- Audiodaten
- Videodaten mit Standardauflösung
- Videodaten mit hoher Auflösung.

8. Vorrichtung nach mindestens einem der Ansprüche 1 und 3 bis 7, **dadurch gekennzeichnet, dass** der Prozessor konfiguriert ist für, oder Verfahren nach mindestens einem der Ansprüche 2 bis 7, **dadurch gekennzeichnet, dass** das Verfahren umfasst:

das Erkennen, dass die Speicherungsdauer in dem Zeitverschiebungspuffer einen dritten Wert MBSS erreicht.

9. Vorrichtung nach mindestens einem der Ansprüche 1 und 3 bis 8, **dadurch gekennzeichnet, dass** der Prozessor konfiguriert ist für, oder Verfahren nach mindestens einem der Ansprüche 2 bis 8, **dadurch gekennzeichnet, dass** das Verfahren umfasst:

- das Erkennen der Daten im Zusammenhang mit der durch den Nutzer visualisierten Sprache und/oder durch den Nutzer angeschauten Untertitelung,
- die Aufzeichnung im Zeitverschiebungspuffer nur der erkannten Daten.

10. Vorrichtung oder Verfahren nach den Ansprüchen 8 und 9, **dadurch gekennzeichnet, dass** das Erkennen der Daten im Zusammenhang mit einer Sprache und/oder einer Untertitelung und die Aufzeichnung nur der erkannten Daten durchgeführt wird, wenn die Speicherungsdauer den dritten Wert MBSS erreicht.

11. Verfahren nach Anspruch 8 oder 10, **dadurch gekennzeichnet, dass** der Prozessor konfiguriert ist für, oder Verfahren nach Anspruch 8 oder 10, **dadurch gekennzeichnet, dass** das Verfahren umfasst: das Initiieren einer Transcodierung der empfangenen Daten, wenn die Speicherungsdauer den dritten Wert MSBB erreicht.

12. Vorrichtung nach Anspruch 11, **dadurch gekennzeichnet, dass** der Prozessor konfiguriert ist für, oder Verfahren nach Anspruch 11, **dadurch gekennzeichnet, dass** das Verfahren umfasst: sobald die Transcodierung initiiert wurde, das Transcodieren der empfangenen Daten, sofern die Speicherungsdauer in dem Zeitverschiebungspuffer über einem vierten Wert liegt, der höher als der besagte zweite Wert ist.

13. Vorrichtung oder Verfahren nach Anspruch 11 oder 12, **dadurch gekennzeichnet, dass** die besagten empfangenen Daten in Gruppen von Bildern kodiert werden, und dadurch, dass der Prozessor konfiguriert ist für, oder dass das Verfahren umfasst: die Aufzeichnung in dem Zeitverschiebungspuffer ausschließlich eines Prozentsatzes, der unterhalb der Gesamtmenge der empfangenen Gruppen von Bildern liegt, wenn die überschrittene Speicherungsdauer den dritten Wert MBSS erreicht.

**Claims**

1. Device for receiving and recording data on a recording medium, the device comprising a processor for implementing a timeshift function, allowing, simultaneously with a recording of data received in a timeshift buffer memory of said recording medium, a delayed playback of data stored in the timeshift buffer memory, said recording function comprising:

- when the read pointer is not at the beginning of the timeshift buffer memory, truncating said beginning of the timeshift buffer memory, when a quantity of data stored in the timeshift buffer memory reaches a first value (BSB), while a duration of storage of the data received in the timeshift buffer memory does not reach a second value (BSS), or when the duration of storage of the data received in the timeshift buffer memory reaches the second value (BSS),
- when the read pointer is at the beginning of the timeshift buffer memory, checking that the device is in the mode for playback of the data in the timeshift buffer memory with a playback speed equal to or greater than a normal playback speed, and otherwise switching the device to the playback mode at the normal playback speed when the storage time of the data received in the timeshift buffer memory reaches the second value (BSS),

where the beginning of the timeshift buffer memory corresponds to a plurality of addresses of said timeshift buffer memory, the number of addresses of said plurality of addresses being dependent on the data input rate or proportional to the size of said timeshift buffer memory.

2. Method for receiving and recording data on a recording medium, in a device comprising a processor for implementing a timeshift function, allowing, simultaneously with a recording of data received in a timeshift buffer memory of said recording medium, a delayed playback of data stored in the timeshift buffer memory, said recording function comprising:

- when the read pointer is not at the beginning of the timeshift buffer memory, truncating said beginning of the timeshift buffer memory, when a quantity of data stored in the timeshift buffer memory reaches a first value (BSB), when a duration of storage of the data received in the timeshift buffer memory does not reach a second value (BSS), or when the duration of storage of the data received in the timeshift buffer memory reaches the second value (BSS),
- when the read pointer is at the beginning of the timeshift buffer memory, checking that the device is in the mode for playback of the data in the timeshift buffer memory with a playback speed at least equal to or greater than a normal playback speed, and otherwise switching the device to the playback mode at the normal playback speed when the storage time of the data received in the timeshift buffer memory reaches the second value (BSS);

where the beginning of the timeshift buffer memory corresponds to a plurality of addresses of said timeshift buffer memory, the number of said plurality of addresses being dependent on the data input rate or proportional to the size of said timeshift buffer memory.

3. Device according to claim 1 **characterised in that** the processor is configured for, or method according to claim 2 **characterised in that** the method comprises:

- analysing, upon each reception of a data channel, an average rate of each channel,
- adjusting the first value (BSB) of the quantity of data recorded and/or the second value (BSS) of the duration of storage as a function of said average rate.

4. Device according to claim 1 or 3, or method according to claim 2 or 3, **characterised in that**:

- analysing the average flow rate comprises analysing a maximum flow rate of each channel, and
- adjusting the second value (BSS) of duration of storage is a function of said average flow rate and the maximum flow rate of each channel.

5. Device according to at least one of claims 1, 3 or 4, or method according to at least one of claims 2 to 4, **characterised in that**:

- analysing the average flow rate comprises analysing a maximum flow rate of each channel, and
- the first value (BSB) of the quantity of recorded data is adjusted for each channel according to its average flow rate and its maximum flow rate.

6. Device according to any one of claims 1 and 3 to 5, **characterised in that** the processor is configured for, or method according to one at least of claims 2 to 5, **characterised in that** the method comprises:

- analysing the type of data received,
- adjusting the second value (BSS) of duration of storage according to the type of data received.

7. Device or Method according to claim 6, **characterised in that** the type of data received belong to a group comprising:

- Audio data,
- Standard definition video data,
- High definition video data.

8. Device according to at least one of claims 1 and 3 to 7, **characterised in that** the processor is configured for, or method according to one at least of claims 2 to 7, **characterised in that** the method comprises: detecting that the duration of storage in the timeshift buffer memory reaches a third MBSS value.

9. Device according to at least one of claims 1 and 3 to 8, **characterised in that** the processor is configured for, or method according to one at least of claims 2 to 8, **characterised in that** the method comprises:

  - detecting data relating to the language viewed by the user and/or the subtitling watched by the user,
  - recording only the detected data in the timeshift buffer memory.

10. Device according to claims 8 and 9 **characterised in that** detecting the data relating to a language and/or to a subtitling and recording only the detected data are implemented when the duration of storage reaches the third MBSS value.

11. Device according to claim 8 or 10 **characterised in that** the processor is configured for, or method according to claim 8 or 10 **characterised in that** the method comprises, initiating a transcoding of the data received when the duration of storage reaches the third MSBB value.

12. Device according to claim 11 **characterised in that** the processor is configured for, or method according to claim 11 **characterised in that** the method comprises: once the transcoding is initiated, transcoding the received data as long as the duration of storage in the buffer memory is greater than a fourth value greater than said second value.

13. Device or method according to claim 11 or 12, **characterised in that** said data received are coded into groups of images and **in that** the processor is configured for, or the method comprises, recording in the timeshift buffer memory only a percentage less than all of the groups of images received when the duration of storage exceeded reaches the third value MBSS.

Fig 1

Fig 2

Fig 3

S1

Paramétrage BSS

S2

Réception et enregistrement

S3

Apprentissage par canal

S4

Paramétrage de la mémoire tampon

Fig 4

F1

Réception et enregistrement

F2

Détermination du type de flux

F3

Flux différent ?

non

oui

F4

Modification du paramétrage de la mémoire tampon.

Fig 5

Fig 6a

Fig 6b

A1

Réception et enregistrement

A2

non

Taux de
remplissage
critique ?

oui

A3

Détection de la langue
visualisée

A4

Enregistrement des données /
sous-titres  dans la langue
visualisée

Fig 7a

A1

Réception et enregistrement

A'2

non

Service haut débit
?

oui

A3

Détection de la langue
visualisée

A4

Enregistrement des données /
sous-titres dans la langue
visualisée

Fig 7b

**Fig 8a**

Réception et enregistrement — H1

non

Taux critique ? — H2

oui

Enregistrement partiel des GOPs ; enregistrement audio total — H3

**Fig 8b**

Réception et enregistrement — H1

non

Haut débit ? — H'2

oui

Enregistrement partiel des GOPs ; enregistrement audio total — H3

Fig 9

Étape T1 ou E1

V1

non    V2    non    V3

Données audio ?

Données vidéo SD ?

Données vidéo HD ?

oui    oui    oui

V4

BSS=BSS_aud
BSB=BSB_aud
MBSS=MBSS_aud

V5

BSS=BSS_SD
BSB=BSB_SD
MBSS=MBSS_SD

V6

BSS=BSS_HD
BSB=BSB_HD
MBSS=MBSS_HD

Étape T2 ou E2    Étape T2 ou E2    Étape T2 ou E2

Fig 10

Étape T1 ou E1

W1    W2    W3

Chaîne H264 ?

non    Chaîne MPEG-2 ?

non    Autre ?

oui    oui    oui

W4

BSS=BSS_HD
BSB=BSB_HD
MBSS=MBSS_HD

W5

BSS=BSS_SD
BSB=BSB_SD
MBSS=MBSS_SD

W6

BSS=BSS_X
BSB=BSB_X
MBSS=MBSS_X

Étape T2 ou E2    Étape T2 ou E2    Étape T2 ou E2

Fig 11

Étape T1 ou E1

Apprentissage par canal
lors de chaque changement de canal — Z1

Fixation des seuils en
fonction du débit — Z2

Étape T2 ou E2

**Fig 12**

Étape T1

Haut débit ? — L1
non
oui

Acquisition,
modification et
enregistrement des
PMTs — L2

Transcodage — L3

Étape T2

**Fig 13a**

Étape T4

Haut débit ? — L1
non
oui

Acquisition,
modification et
enregistrement des
PMTs — L2

Transcodage — L3

Étape T5

**Fig 13b**

Étape T1

K1

Haut débit ?

non

oui

K2

Détection de la
langue et des
sous-titrages

K3

Enregistrement
des données et
sous-titres
correspondants

Étape T3

Fig 14a

Étape T4

K1

Haut débit ?

non

oui

K2

Détection de la
langue et des
sous-titrages

K3

Enregistrement
des données et
sous-titres
correspondants

Étape T5

Fig 14b

Étape T1

M1

Haut débit ?

non

oui

M2

Enregistrement
partiel des GOPs ;
enregistrement
audio

Étape T2

Fig 15a

Étape T4

M1

Haut débit ?

non

oui

M2

Enregistrement
partiel des GOPs ;
enregistrement
audio

Étape T5

Fig 15b

```
                                                        S1
              ┌─────────────────────┐
              │   Paramétrage du    │
              │      buffer         │
              └─────────────────────┘
                         │
                         ▼
                                                        S2
      ┌───────────────────────────────────┐
      │     Réception et enregistrement    │
      └───────────────────────────────────┘
                         │
                         ▼
                                                        S3
      ┌───────────────────────────────────┐
      │        Apprentissage par canal     │
      └───────────────────────────────────┘
                         │
                         ▼
                                                        S4
      ┌───────────────────────────────────┐
      │     Paramétrage de la mémoire      │
      │             tampon                 │
      └───────────────────────────────────┘
```

Fig 16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2150045 A2
- US 2002172497 A1
- WO 2004100539 A1
- WO 2007116334 A2